# EUROPEAN PATENT APPLICATION

(11) **EP 4 838 288 A1**
(43) Date of publication of application: **11.11.2026**
(21) Application number: 25862413.9
(22) Date of filing: 19.09.2025
(51) Int. Cl.: G02B 27/01

(54) **HEAD-MOUNTED DISPLAY APPARATUS AND CONTROL METHOD THEREFOR, AND MOVABLE PLATFORM SYSTEM**

(71) Applicant: Antigravity (SZ) Technology Co., Ltd., Shenzhen, Guangdong 518100 (CN)
(72) Inventor: WEN, Haibo, Shenzhen, Guangdong 518100 (CN)
(74) Representative: Michalski Hüttermann & Partner mbB
(86) International application number: PCT/CN2025/122725
(87) International publication number: WO 2026/052139

(57) **Abstract**

The implementations of the present disclosure provide a head-mounted display apparatus and a control method thereof, and a mobile platform system. The head-mounted display apparatus includes a housing, a first display assembly, and a control assembly. The housing has an electrical cavity. The first display assembly is at least partially disposed within the electrical cavity. The first window control assembly is configured to control the first display assembly to display an image. The control assembly is disposed within the electrical cavity and at least partially located on a side of the first display assembly along a first direction. The first direction is a direction away from a face of a wearer; and/or the first direction is a forward direction of the head-mounted display apparatus.

## Description

### Related Application

This disclosure is based on PCT Application No. PCT/CN2024/117245, filed on September 05, 2024, and claims priority to the above PCT application. The entire content of the above PCT application is incorporated herein by reference.

### Technical Field

Some implementations of the present disclosure relate to the technical field of display apparatuses, and in particular, to a head-mounted display apparatus and a control method thereof, and a mobile platform system.

### Background

A head-mounted display apparatus is a type of apparatus that can be worn on a wearer's head and can at least display images to the wearer's eyes. In related technologies, head-mounted display apparatuses have problems such as small display interface size and poor wearing comfort, affecting the wearer's user experience.

### Summary

In view of this, some implementations of the present disclosure are expected to provide a head-mounted display apparatus capable of improving the wearer's user experience.

A first aspect of some implementations of the present disclosure provides a head-mounted display apparatus, including: a housing having an electrical cavity; a first display assembly at least partially disposed within the electrical cavity; and a control assembly configured to control the first display assembly to display an image, where the control assembly is disposed within the electrical cavity and at least partially located on a side of the first display assembly along a first direction, the first direction being a direction away from a face of a wearer; and/or the first direction is a forward direction of the head-mounted display apparatus. In the head-mounted display apparatus of some implementations, by disposing the control assembly at least partially on a side of the first display assembly along the first direction, it helps to reduce the occupation of space on opposite sides of the first display assembly along the height direction and/or along the width direction of the head-mounted display apparatus by the control assembly. In this way, it is possible to arrange a larger-sized first display assembly under the same size of the housing, improving the wearer's user experience.

A second aspect of some implementations of the present disclosure provides a mobile platform system, including: the head-mounted display apparatus according to the first aspect of some implementations of the present disclosure; and a mobile platform, where the mobile platform is equipped with an imaging device, and an image captured by the imaging device can be transmitted to the first display assembly for display.

A third aspect of some implementations of the present disclosure provides a head-mounted display apparatus, including: a device body, where the device body includes a plurality of outer surfaces and an inner surface facing a face of a wearer; a first display assembly having a first window exposed on the inner surface; a second display assembly having a second window exposed on at least one of the outer surfaces; and an interaction assembly configured to receive an interaction command, where the interaction command is configured to control a display state of the first display assembly and/or the second display assembly.

A fourth aspect of some implementations of the present disclosure provides a mobile platform system, including: the head-mounted display apparatus according to the third aspect of some implementations of the present disclosure; and a mobile platform, where the mobile platform is equipped with an imaging device. An image captured by the imaging device can be transmitted to the first display assembly and/or the second display assembly for display.

A fifth aspect of some implementations of the present disclosure provides a method for controlling a head-mounted display apparatus, where the head-mounted display apparatus includes a device body, a first display assembly, a second display assembly, and an interaction assembly, the device body includes a plurality of outer surfaces and an inner surface facing a face of a wearer, the first display assembly has a first window exposed on the inner surface, and the second display assembly has a second window exposed on at least one of the outer surfaces. The method includes: in response to receiving an interaction command by the interaction assembly, determining a display mode of the head-mounted display apparatus; and controlling a display state of the first display assembly and/or the second display assembly based on the display mode.

A sixth aspect of some implementations of the present disclosure provides a head-mounted display apparatus, further including a processor and a memory for storing a computer program executable on the processor, where the processor, when executing the computer program, performs the steps of the method according to the fifth aspect of some implementations of the present disclosure.

A seventh aspect of some implementations of the present disclosure provides a head-mounted display apparatus, including: a housing having an electrical cavity, an air inlet and an air outlet communicating with the electrical cavity; and a cooling fan disposed within the electrical cavity and configured to drive airflow from the air inlet to the air outlet, where an opening direction of the air outlet is toward a first direction, or the opening direction of the air outlet is inclined toward the first direction relative to a first reference plane, the first direction being a direction away from a face of a wearer, and the first reference plane being perpendicular to the first direction.

An eighth aspect of some implementations of the present disclosure provides a head-mounted display apparatus, including: a housing having an electrical cavity, an air inlet and an air outlet communicating with the electrical cavity; and a cooling fan disposed within the electrical cavity and configured to drive airflow from the air inlet to the air outlet, where the housing includes two view zones distributed along a width direction of the head-mounted display apparatus, and the air outlet is located between the two view zones along the width direction.

A ninth aspect of some implementations of the present disclosure provides a head-mounted display apparatus, including: a housing having an electrical cavity, an air outlet and a plurality of air inlets communicating with the electrical cavity; and a cooling fan disposed within the electrical cavity and configured to drive airflow from the plurality of air inlets to the air outlet, where the plurality of air inlets are distributed on opposite sides of the air outlet along a width direction of the head-mounted display apparatus.

### Brief Description of Drawings

FIG. 1 is an axonometric structural schematic diagram of a head-mounted display apparatus according to some implementations of the present disclosure.
FIG. 2 is an exploded schematic diagram of a head-mounted display apparatus according to some implementations of the present disclosure.
FIG. 3 is an axonometric schematic diagram of a head-mounted display apparatus from another perspective according to some implementations of the present disclosure.
FIG. 4 is a structural schematic diagram of a head-mounted display apparatus observed along a first direction according to some implementations of the present disclosure, where a face shield is hidden.
FIG. 5 is a cross-sectional schematic diagram A-A of the head-mounted display apparatus in FIG. 4.
FIG. 6 is a cross-sectional schematic diagram B-B of the head-mounted display apparatus in FIG. 4.
FIG. 7 is a cross-sectional schematic diagram C-C of the head-mounted display apparatus in FIG. 4.
FIG. 8 is a structural schematic diagram of a control assembly facing a side of a cooling fan according to some implementations of the present disclosure.
FIG. 9 is a structural schematic diagram of a control assembly facing a side of a display assembly according to some implementations of the present disclosure.
FIG. 10 is an exploded schematic diagram of part D of the head-mounted display apparatus in FIG. 2.
FIG. 11 is a structural schematic diagram of a second heat sink according to some implementations of the present disclosure.
FIG. 12 is an exploded schematic diagram of part E of the head-mounted display apparatus in FIG. 2.
FIG. 13 is a structural schematic diagram of a mobile platform system according to some implementations of the present disclosure.
FIG. 14 is an information interaction schematic diagram of a mobile platform system according to some implementations of the present disclosure.
FIG. 15 is a structural schematic diagram of a mobile platform according to some implementations of the present disclosure.
FIG. 16 is a usage scenario schematic diagram of a mobile platform system according to some implementations of the present disclosure.
FIG. 17 is a flowchart of a method for controlling a head-mounted display apparatus according to some implementations of the present disclosure.

### Description of Reference Numerals

100. Head-mounted display apparatus; 10. Housing; 10a. Electrical cavity; 10b. View zone; 11. Front shell; 111. Third frame body; 112. Second connecting wall; 113. Fourth frame body; 114. Inclined wall; 115. Fastener; 12. Middle frame; 12a. Relief groove; 121. Side wall; 122. Top wall; 123. Bottom wall; 13. Rear shell; 131. First frame body; 132. First connecting wall; 133. Second frame body; 14. Air outlet; 15. Air inlet; 15a. First air inlet; 15b. Second air inlet; 20. First display assembly; 20a. First window; 21. Bracket; 21a. Air duct; 21b. Air duct inlet; 21c. Air duct outlet; 22. Opto-mechanical module; 221. Display screen; 222. Second heat sink; 2221. Second heat dissipation fin; 2222. Second plate body; 223. Lens group; 2231. First lens; 2232. Second lens; 2233. Third lens; 23. Shielding sheet; 30. Control assembly; 31. Electrical unit; 311. First electrical unit; 311a. Main control unit; 311b. WIFI unit; 311c. Main battery unit; 312. Second electrical unit; 312a. Radio frequency unit; 312b. Storage unit; 312c. Audio unit; 312d. Auxiliary battery unit; 312e. Bluetooth unit; 32. Circuit board; 33. Shielding body; 34. First heat sink; 341. First heat dissipation fin; 342. First plate body; 35. WIFI antenna; 36. Charging interface; 371. SD card interface; 372. USB interface; 381. First audio adapter; 382. Second audio adapter; 39. Bluetooth antenna; 40. Cooling fan; 40a. Blowing side; 41. Heat conduction body; 50. Face shield; 50a. Shield cavity; 50b. Vent; 60. Adjustment assembly; 61. Adjustment knob; 62. Guide rail; 63. Gear set; 70. Second display assembly; 70a. Second window; 71. Outer screen assembly; 72. Outer screen adapter; 80. Interaction assembly; 80a. Operation surface; 81. Touchpad; 811. Cover plate; 812. Touch sensing board; 813. Adhesive; 82. Touch adapter; 83. Indicator device; 831. Light board; 832. Light guide plate; 833. Second adhesive; 90. Antenna; 90a. First omnidirectional antenna; 90b. Second omnidirectional antenna; 90c. First directional antenna; 90d. Second directional antenna; 90e. Third directional antenna; 90f. Fourth directional antenna; 91. Sound device; 92. Sound receiving device; 93. Image sensor; 94. Human body detection sensor; 941. Distance sensor; 942. Distance sensing adapter; 200. Mobile platform; 201. Imaging device; 300. Remote control device; 400. Terminal device; 500. Cloud server.

### Detailed Description

To make the objectives, technical solutions, and advantages of the present disclosure clearer, the present disclosure will be further described in detail below with reference to the accompanying drawings and implementations. It should be understood that the specific implementations described herein are only used to explain the present disclosure and are not intended to limit the present disclosure.

In the specific implementations, various specific technical features described can be combined in any suitable manner without contradiction. For example, different implementations and technical solutions can be formed by combining different specific technical features. To avoid unnecessary repetition, various possible combinations of specific technical features in the present disclosure will not be described separately.

In the following description, the terms "first," "second," etc., are only used to distinguish different objects and do not indicate that the objects are the same or related. It should be understood that the orientation descriptions "upper," "lower," "outer," and "inner" refer to orientations in a normal use state. The "left" and "right" directions indicate the left and right directions shown in the specific corresponding schematic diagrams, which may or may not be the left and right directions in the normal use state.

It should be noted that the terms "include," "contain," or any other variants thereof are intended to cover non-exclusive inclusion, so that a process, method, article, or device including a series of elements includes not only those elements but also other elements not explicitly listed, or also includes elements inherent to such a process, method, article, or device. Without further limitation, an element defined by the statement "includes a..." does not exclude the existence of other identical elements in the process, method, article, or device including the element. "A plurality of" means greater than or equal to two.

In the description of the present disclosure, the orientation or positional relationships of "first direction," "second direction," "width direction," and "height direction" are based on the orientation or positional relationships shown in the accompanying drawings. Specifically, the "first direction" is the direction indicated by arrow L1 in the drawings, the "second direction" is the direction indicated by arrow L2 in the drawings, the "width direction" is the direction indicated by arrow L3 in the drawings, and the "height direction" is the direction indicated by arrow L4 in the drawings. It should be understood that these orientation terms are only for convenience of describing the present disclosure and simplifying the description, rather than indicating or implying that the referred apparatus or element must have a specific orientation, be constructed and operated in a specific orientation, and therefore cannot be understood as a limitation on the present disclosure.

In the description of some implementations of the present disclosure, the orientation or positional relationships indicated by technical terms such as "length," "width," "thickness," "upper," "lower," "front," "rear," "left," "right," "vertical," "horizontal," "top," "bottom," "inner," "outer," "circumferential," etc., are based on the orientation or positional relationships shown in the accompanying drawings, and are only for convenience of describing some implementations of the present disclosure and simplifying the description, rather than indicating or implying that the referred apparatus or element must have a specific orientation, be constructed, operated, or used in a specific orientation, and therefore cannot be understood as a limitation on some implementations of the present disclosure.

In the description of some implementations of the present disclosure, unless otherwise clearly specified and limited, terms such as "mount," "connect," "connected," and "fix" should be understood in a broad sense. For example, it may be a fixed connection, a detachable connection, or an integral formation. It may be a mechanical connection or an electrical connection. It may be a direct connection, or an indirect connection through an intermediate medium, or it may be an internal communication between two elements or an interaction relationship between two elements. For those of ordinary skill in the art, the specific meanings of the above terms in some implementations of the present disclosure can be understood according to specific situations.

In the description of some implementations of the present disclosure, unless otherwise clearly specified and limited, the technical term "contact" should be understood in a broad sense. It may be direct contact, or contact through an intermediate medium layer. It may be contact where there is substantially no interaction force between the two contacting objects, or contact where there is an interaction force between the two contacting objects.

Some implementations of the present disclosure provide a head-mounted display apparatus. It should be noted that the head-mounted display apparatus may be a display apparatus supporting Augmented Reality (AR), Virtual Reality (VR), or Mixed Reality (MR) technology. Specifically, AR technology uses computer image technology to simulate and emulate physical information of the physical world, that is, turning the real world into a virtual world. VR technology uses computer graphics technology and visualization technology to generate virtual objects that do not exist in the physical world and accurately "place" the virtual objects in the physical world, that is, turning the virtual world into a part of the real world. MR technology establishes an interaction relationship between the virtual world and the real world, that is, forming a mixed world where virtuality and reality interact.

In the relevant description of the disclosure, the front-rear direction, width direction, and height direction of the head-mounted display apparatus are directions defined based on the self-coordinate system of the head-mounted display apparatus. Here, the definition method of the self-coordinate system of the head-mounted display apparatus can refer to the general definition in the art.

Exemplarily, the self-coordinate system of the head-mounted display apparatus is a right-handed three-dimensional Cartesian coordinate system fixed to the head-mounted display apparatus itself. The origin of this coordinate system is usually located at the optical center point on the front of the head-mounted display apparatus, or located at the midpoint between two opto-mechanical modules.

In a case where a wearer wears the head-mounted display apparatus in a correct manner, the X-axis extends from the origin toward the wearer's right ear, and a direction parallel to the X-axis is the width direction of the head-mounted display apparatus, where the positive direction of the X-axis is right and the negative direction is left. The Y-axis extends from the origin toward the top of the wearer's head, and a direction parallel to the Y-axis is the height direction of the head-mounted display apparatus, where the positive direction of the Y-axis is top and the negative direction is bottom. The Z-axis extends from the origin toward the direct front of the wearer, and a direction parallel to the Z-axis is the front-rear direction of the head-mounted display apparatus, where the positive direction of the Z-axis is front and the negative direction is rear. Furthermore, the direction parallel to the Z-axis is usually also referred to as the thickness direction of the head-mounted display apparatus.

### First Implementation

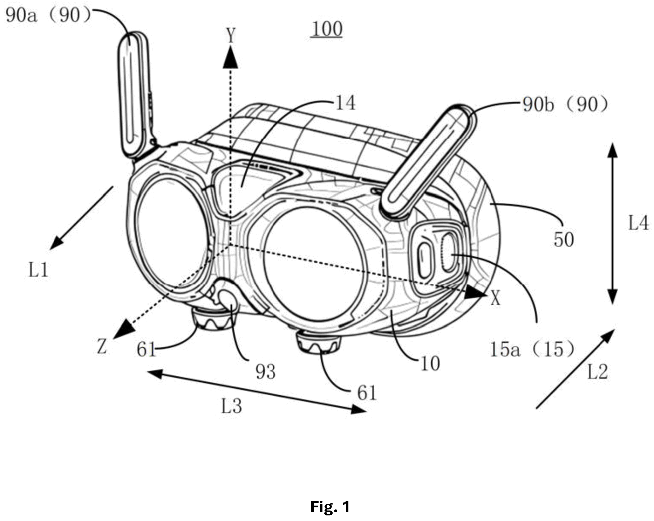

Referring to FIGS. 1-12, a first implementation of the present disclosure provides a head-mounted display apparatus 100 including a housing 10, a first display assembly 20, and a control assembly 30.

The housing 10 is configured to carry the first display assembly 20 and the control assembly 30. The specific structural form of the housing 10 is not limited. In some examples, the housing 10 is formed as a frame structure.

In some implementations, referring to FIGS. 1-3, the housing 10 has two view zones 10b distributed along a width direction of the head-mounted display apparatus 100.

Exemplarily, in a case where the wearer correctly wears the head-mounted display apparatus 100, an area of the housing 10 facing the wearer's left eye forms one view zone 10b, and an area of the housing 10 facing the wearer's right eye forms the other view zone 10b.

As another example, the housing 10 has a nose pad area for engaging the wearer's nose. Opposite side areas of the nose pad area along the width direction of the head-mounted display apparatus 100 (an area to the left of the left edge of the nose pad area, and an area to the right of the right edge), respectively, form two view zones 10b.

As yet another example, the housing 10 is formed as a frame structure. The frame structure includes a left frame and a right frame. In a projection along the front-rear direction of the head-mounted display apparatus 100, an area covered by the projection of the left frame forms one view zone 10b, and an area covered by the projection of the right frame forms the other view zone 10b.

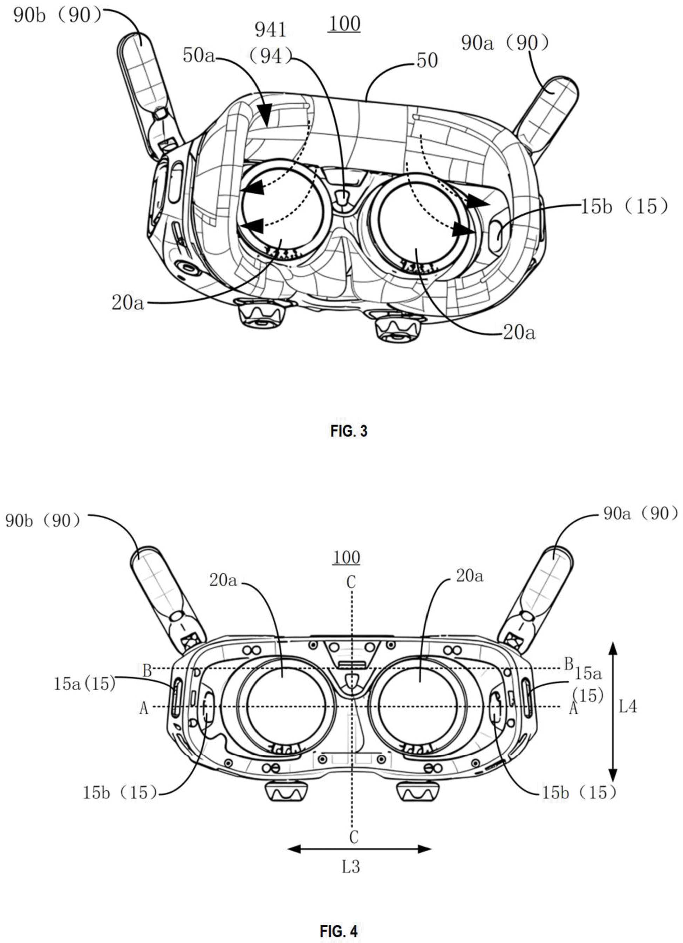

In some implementations, referring to FIGS. 1 and 3, the housing 10 has an inner surface and a plurality of outer surfaces. Here, the inner surface of the housing 10 specifically refers to a surface that cannot be observed from the perspective of a non-wearer in a case where the wearer correctly wears the head-mounted display apparatus 100. In other words, the inner surface of the housing 10 refers to a surface of the housing 10 facing the face of the wearer in a case where the wearer correctly wears the head-mounted display apparatus 100.

Corresponding to the inner surface, the outer surface of the housing 10 specifically refers to a surface that can be observed from the perspective of a non-wearer in a case where the wearer correctly wears the head-mounted display apparatus 100. In other words, the outer surface of the housing 10 refers to a surface not blocked by the wearer's face or other structures of the head-mounted display apparatus 100 in a case where the wearer correctly wears the head-mounted display apparatus 100.

Here, that the housing 10 has a plurality of outer surfaces specifically means that the housing 10 has a plurality of outer surfaces facing different directions. Exemplarily, the plurality of outer surfaces of the housing 10 include, but are not limited to, a front surface (a surface observable by a non-wearer from directly in front of the wearer), two side surfaces (surfaces observable by a non-wearer from directly left and right of the wearer), a top surface (a surface observable by a non-wearer from directly above the wearer), and a bottom surface (a surface observable by a non-wearer from directly below the wearer).

In some implementations, the head-mounted display apparatus 100 includes a temple assembly and/or a head-mounted assembly detachably connected to the housing 10.

It can be understood that the wearer can secure the head-mounted display apparatus 100 on the head based on the temple assembly, or secure the head-mounted display apparatus 100 on the head based on the head-mounted assembly, and based on the detachable connection manner, it is convenient for the user to switch according to their own preference.

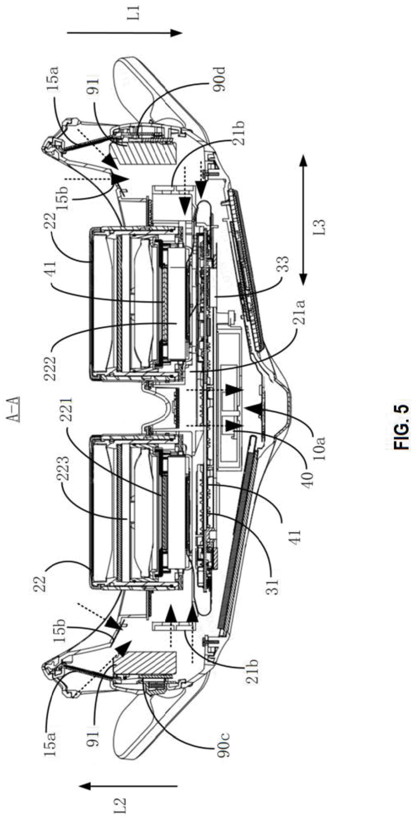

Referring to FIGS. 5-7, the housing 10 has an electrical cavity 10a. Here, the electrical cavity 10a specifically refers to a cavity structure formed inside the housing 10. The electrical cavity 10a is at least configured to provide an assembly space for the first display assembly 20 and the control assembly 30.

In some implementations, as mentioned above, the housing 10 has a plurality of outer surfaces and an inner surface facing the face of the wearer, and the electrical cavity 10a may be specifically enclosed by the inner surface and the plurality of outer surfaces.

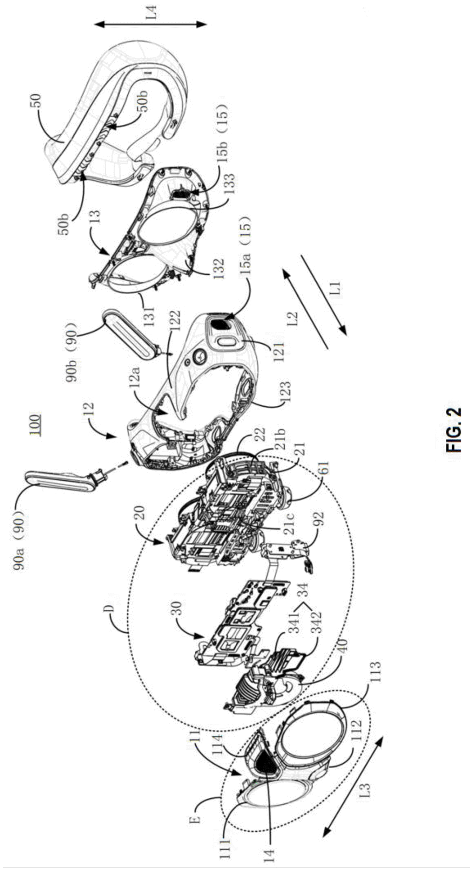

In some implementations, referring to FIG. 2, the housing 10 includes a front shell 11, a middle frame 12, and a rear shell 13 arranged opposite to each other along the front-rear direction of the head-mounted display apparatus 100. The front shell 11 and the rear shell 13 are arranged opposite to each other along the front-rear direction of the head-mounted display apparatus 100. The front shell 11 forms a front wall of the housing 10, the rear shell 13 forms a rear wall of the housing 10, and the middle frame 12 connects the front shell 11 and the rear shell 13. The front shell 11, the middle frame 12, and the rear shell 13 collectively enclose one another to form the electrical cavity 10a. In some implementations, the front shell 11, the middle frame 12, and the rear shell 13 may be connected by means such as bonding, snapping, welding, fastener connection 115, etc., or at least two of the front shell 11, the middle frame 12, and the rear shell 13 may be formed as an integral structure, or the front shell 11, the middle frame 12, and the rear shell 13 may be formed as an integral structure.

Exemplarily, referring to FIG. 2, the middle frame 12 includes two side walls 121 arranged opposite to each other along the width direction of the head-mounted display apparatus 100, and a top wall 122 and a bottom wall 123 arranged opposite to each other along the height direction of the head-mounted display apparatus 100. Two ends of the side walls 121 along the height direction are respectively connected to the top wall 122 and the bottom wall 123. Opposite sides of the middle frame 12 along the front-rear direction of the head-mounted display apparatus 100 form openings. The front shell 11 is disposed at the front opening of the middle frame 12, and the rear shell 13 is disposed at the rear opening of the middle frame 12.

In this implementation, specifically, the inner surface of the housing 10 is formed by the rear shell 13, and the plurality of outer surfaces of the housing 10 are formed by the front shell 11 and the middle frame 12.

The first display assembly 20 is configured to display an image to the wearer. Exemplarily, the first display assembly 20 includes two opto-mechanical modules 22 distributed along the width direction of the head-mounted display apparatus 100. The two opto-mechanical modules 22 are respectively configured to display images to the two eyes of the wearer. In other words, the two opto-mechanical modules 22 are respectively configured as a left opto-mechanical module corresponding to the wearer's left eye and a right opto-mechanical module corresponding to the wearer's right eye. Here, the specific structural form of the opto-mechanical module 22 is not limited. Exemplarily, the opto-mechanical module 22 adopts an optical folding light path structure. In this way, the total length of the optical system for internal screen display in the head-mounted display apparatus 100, i.e., the TTL (Total Track Length) thickness, can be effectively reduced, which is beneficial for realizing a compact design of the head-mounted display apparatus 100 and reducing the overall volume of the apparatus.

Exemplarily, the opto-mechanical module 22 may adopt a Pancake (ultra-short throw optical folding light path) structure. By adopting a "folding" light path structure, the Pancake optical solution can significantly shorten the straight-line distance from the screen to the eyes while ensuring virtual image magnification, thereby reducing the volume of the opto-mechanical part. This design not only greatly reduces the thickness of VR glasses but also effectively reduces structural costs. Specifically, the Pancake optical solution can further reduce the thickness of the opto-mechanical module by folding the optical path multiple times. For example, the Pancake opto-mechanical module 22 can not only bring higher clarity, smaller distortion, and chromatic aberration, but its thickness can also be further reduced after folding multiple times. In this way, the Pancake solution can provide a good overall viewing experience and realize a thin and light design of the head-mounted display apparatus 100.

As mentioned above, in some implementations, the housing 10 has two view zones 10b. In such implementations, the two opto-mechanical modules 22 are respectively disposed in the two view zones 10b.

The first display assembly 20 is at least partially disposed within the electrical cavity 10a. Here, the entire structure of the first display assembly 20 may be disposed within the electrical cavity 10a, or a part of the structure of the first display assembly 20 is disposed within the electrical cavity 10a and another part of the structure is disposed outside the electrical cavity 10a.

Exemplarily, referring to FIGS. 5-7, along a direction from front to back of the head-mounted display apparatus 100, a part of the first display assembly 20 protrudes out of the electrical cavity 10a.

Referring to FIG. 2, taking the first display assembly 20 including two opto-mechanical modules 22 and the housing 10 including the rear shell 13 as an example, the rear shell 13 includes a first frame body 131, a first connecting wall 132, and a second frame body 133 sequentially distributed along the width direction of the head-mounted display apparatus 100. The first frame body 131 and the second frame body 133 are respectively located at positions corresponding to the two view zones 10b of the housing 10. The two opto-mechanical modules 22 respectively pass through the first frame body 131 and the second frame body 133 along the front-rear direction, thereby protruding out of the electrical cavity 10a. Exemplarily, the first frame body 131 and the second frame body 133 are substantially formed as annular closed structures (e.g., substantially circular ring structures).

The advantage of a part of the first display assembly 20 protruding out of the electrical cavity 10a is that it helps to reduce the overall thickness of the housing 10 along the front-rear direction of the head-mounted display apparatus 100 (that is, the dimension along the first direction), improving the aesthetic appearance and wearing comfort of the head-mounted display apparatus 100.

The control assembly 30 is configured to control the first display assembly 20 to display an image. The specific structural form of the control assembly 30 is not limited, as long as it can realize controlling the first display assembly 20 to display an image.

Exemplarily, the control assembly 30 is configured to obtain an image (e.g., a panoramic image captured by an imaging device mounted on a mobile platform communicatively connected to the head-mounted display apparatus 100), process the image (e.g., render an area in the panoramic image corresponding to the wearer's current viewing angle), and control the first display assembly 20 to display the processed image.

The control assembly 30 is disposed within the electrical cavity 10a and at least partially located on a side of the first display assembly 20 along a first direction.

Exemplarily, the first display assembly 20 has a first window 20a exposed on the inner surface of the housing 10, and the first direction is perpendicular to the first window 20a.

It should be noted that the "window" mentioned in some implementations of the present disclosure refers to an outer surface of a component having a display function (including the first display assembly 20 and the second display assembly 70 in some implementations) for a user to observe an image. In other words, the window is a window for the user to observe an image from the outside. Through the window, the user can observe light emitted by an internal light-emitting structure (e.g., a backlight plate of a display screen), thereby realizing image observation.

Here, that the first window 20a is exposed on the inner surface of the housing 10 specifically means that the wearer can observe at least a portion of the first window 20a in a direction toward the inner surface of the housing 10. In other words, the wearer can observe the image displayed by the first display assembly 20 from a direction toward the inner surface of the housing 10.

Exemplarily, the first display assembly 20 includes a display screen and one or more lenses disposed on a side of the display screen facing the wearer. The first window specifically refers to a surface of the lens closest to the wearer facing the wearer when the wearer wears the head-mounted display apparatus correctly.

Here, the first window 20a specifically refers to a surface that can be directly observed from a direction toward the inner surface of the housing 10 (that is, in a case where the wearer correctly wears the head-mounted display apparatus 100) and can display an image.

The first direction is specifically set as a direction perpendicular to the first window 20a and opposite to a display direction of the first window 20a. Here, the display direction of the first window 20a refers to a direction perpendicular to the first window 20a and pointing to the wearer. In other words, the first direction is specifically set as a direction perpendicular to the first window 20a and away from the wearer.

As another example, the first direction is a direction away from a face of a wearer. Here, the direction away from a face of a wearer specifically refers to a direction substantially perpendicular to a facial plane of the wearer and away from the face of the wearer in a case where the wearer wears the head-mounted display apparatus 100 in a correct manner. Here, the facial plane of the wearer specifically refers to an imaginary plane passing through the center of the wearer's forehead, the root of the nose, and the center of the chin.

As yet another example, the first direction is a forward direction of the head-mounted display apparatus 100. In other words, the first direction is a thickness direction of the head-mounted display apparatus 100. Here, the forward direction of the head-mounted display apparatus 100 specifically refers to a side pointing to the front in the front-rear direction (which may also be referred to as the thickness direction) of the head-mounted display apparatus 100. As mentioned above, the front-rear direction of the head-mounted display apparatus 100 is a direction defined based on the self-coordinate system of the head-mounted display apparatus 100. For the specific definition method, refer to the description in the relevant part above, which will not be repeated here.

It should be noted that the first direction is defined using three definition methods above, and a direction satisfying any one of the definitions can be considered as the first direction referred to in some implementations of the present disclosure.

It should also be noted that the first direction defined in some implementations of the present disclosure is a single direction, and the present disclosure further defines an opposite direction of the first direction as a second direction.

Those skilled in the art should understand that a large-sized display interface can provide a better user experience for the wearer, especially in a case where the display content of the head-mounted display apparatus 100 is relatively complex. For example, in some implementations, the head-mounted display apparatus 100 is configured to establish a communication connection with a mobile platform to obtain a panoramic image captured by an imaging device mounted on the mobile platform. The first display assembly 20 is configured to be able to display a screen of a corresponding view in the panoramic image according to the wearer's current line of sight. An increase in the size of the display interface of the first display assembly 20 can enable the wearer to observe a wider view of the screen at a single time, thereby improving the wearer's user experience.

In related technologies, the size of the display interface of the head-mounted display apparatus 100 is difficult to meet the usage needs of the wearer, especially difficult to meet the display needs of panoramic images.

In the head-mounted display apparatus 100 of some implementations, by disposing the control assembly 30 at least partially on a side of the first display assembly 20 along the first direction, it helps to reduce the occupation of space on opposite sides of the first display assembly 20 along the height direction and/or along the width direction of the head-mounted display apparatus 100 by the control assembly 30. In this way, it is possible to arrange a larger-sized first display assembly 20 under the same size of the housing 10, improving the wearer's user experience.

In some implementations, referring to FIGS. 1 and 2, the housing 10 has an air outlet 14 communicating with the electrical cavity 10a. An opening direction of the air outlet 14 is toward the first direction, or the opening direction of the air outlet 14 is inclined toward the first direction relative to a first reference plane, the first reference plane being perpendicular to the first direction.

In the relevant description of the present disclosure, the opening direction specifically refers to a direction indicated by a normal vector of the opening.

Here, the air outlet 14 is configured specifically for airflow to flow out from the electrical cavity 10a, thereby meeting the heat dissipation requirements of structures such as the first display assembly 20 and the control assembly 30 disposed within the electrical cavity 10a.

The opening direction of the air outlet 14 may be toward the first direction, or may be inclined toward the first direction relative to the first reference plane. Those skilled in the art should understand that in some implementations where the opening direction of the air outlet 14 is inclined toward the first direction relative to the first reference plane, the opening direction may be front-up, front-down, front-left, front-right, etc. In some implementations, the specific inclination angle range when the opening direction of the air outlet 14 is inclined toward the first direction relative to the first reference plane is not limited.

It should be noted that in some implementations, the number of air outlets 14 may be one or more. In a case where the number of air outlets 14 is multiple, the opening direction of one of the air outlets 14 may satisfy the above requirements, or the opening directions of all air outlets 14 may satisfy the above requirements.

It can be understood that the airflow flowing out of the air outlet 14 is airflow after heat exchange with components in the electrical cavity 10a, and the temperature is relatively high. If this airflow flows to the wearer's body parts, it may cause discomfort. In some implementations, the airflow flowing out of the air outlet 14 will have a tendency to flow toward the front of the wearer. In this way, the probability of the airflow flowing out of the air outlet 14 flowing to the wearer's face (e.g., forehead) or other body parts can be minimized, improving wearing comfort.

In some implementations, the opening direction of the air outlet 14 is inclined toward the first direction relative to the first reference plane, and an angle between the opening direction of the air outlet 14 and the first reference plane is greater than or equal to 25°. In this way, the probability of the airflow flowing out of the air outlet 14 flowing to the wearer's face or other body parts can be further reduced, improving wearing comfort.

In some implementations, specifically, the opening direction of the air outlet 14 is inclined toward the first direction relative to the first reference plane, and the angle between the opening direction of the air outlet 14 and the first reference plane is greater than or equal to 25° and less than or equal to 65°, such as any value among 25°, 30°, 35°, 40°, 45°, 50°, 55°, 60°, 65° or a value between any two. In some implementations, specifically, the angle between the opening direction of the air outlet 14 and the first reference plane is 37°-38°, such as 37.28°.

By setting the inclination angle within the above range, the aesthetic appearance of the head-mounted display apparatus 100 can be improved while reducing the probability of the airflow flowing out of the air outlet 14 flowing to the wearer's face or other body parts.

In some implementations, the opening direction of the air outlet 14 is parallel to a second reference plane, and the second reference plane includes a plane perpendicular to the width direction of the head-mounted display apparatus 100. In some implementations, the opening direction of the air outlet 14 is parallel to the second reference plane, that is, the opening direction of the air outlet 14 is not offset toward the left or right side. In this way, the probability of the airflow flowing out of the air outlet 14 flowing to the wearer's ears can be reduced, and the aesthetic appearance can be improved at the same time.

In some implementations, the opening direction of the air outlet 14 points to a top side of a third reference plane, and the third reference plane is perpendicular to the height direction of the head-mounted display apparatus 100. That is, the opening direction of the air outlet 14 is front-up. In this way, the probability of the airflow flowing out of the air outlet 14 flowing to the wearer's neck and body parts below can be reduced.

In some implementations, referring to FIGS. 1 and 2, the housing 10 includes two view zones 10b distributed along a width direction of the head-mounted display apparatus 100, and the air outlet 14 is located between the two view zones 10b along the width direction.

In some implementations, by disposing the air outlet 14 between the two view zones 10b instead of within the two view zones 10b, the occupation of space within the view zones 10b by the air outlet 14 can be reduced. In this way, it helps to save space and helps to arrange a larger-sized first display assembly 20 under the same size of the housing 10, improving the wearer's user experience.

In some implementations, referring to FIGS. 1 and 2, the housing 10 includes a front shell 11, a middle frame 12, and a rear shell 13. In such implementations, the air outlet 14 may be disposed on the front shell 11, or the air outlet 14 may be disposed on the middle frame 12, or the air outlet 14 may be enclosed by the front shell 11 and the middle frame 12, or a part of the air outlet 14 is disposed on the front shell 11 and another part of the air outlet 14 is disposed on the middle frame 12.

In some implementations, referring to FIGS. 1 and 2, the housing 10 includes a front shell 11. The front shell 11 includes a third frame body 111, a second connecting wall 112, and a fourth frame body 113 sequentially disposed along the width direction of the head-mounted display apparatus 100. The third frame body 111 and the fourth frame body 113 are respectively located at positions corresponding to the two view zones 10b of the housing 10. The air outlet 14 is disposed on the second connecting wall 112. Exemplarily, the third frame body 111 and the fourth frame body 113 are formed as annular closed structures (e.g., substantially formed as circular ring structures).

In this way, the air outlet 14 is disposed between the two view zones 10b, reducing the occupation of space within the view zones 10b by the air outlet 14.

In some implementations, referring to FIG. 2, the front shell 11 includes an inclined wall 114. The inclined wall 114 is connected to the second connecting wall 112. The second connecting wall 112 is disposed toward the first direction. The inclined wall 114 extends obliquely toward the middle frame 12 along a direction away from the second connecting wall 112. In this way, the opening direction of the air outlet 14 is set to be inclined toward the first direction relative to the first reference plane.

In some implementations, referring to FIG. 2, the middle frame 12 has a relief groove 12a, and the inclined wall 114 is disposed within the relief groove 12a. In this way, the structural compactness of the head-mounted display apparatus 100 is improved.

In some implementations, referring to FIG. 2, the inclined wall 114 is disposed on a top side of the second connecting wall 112. In this way, the probability of the airflow flowing out of the air outlet 14 flowing to body parts below the wearer's head (e.g., neck, hands) can be further reduced.

In some implementations, referring to FIGS. 1-6, the housing 10 has an air inlet 15 communicating with the electrical cavity 10a.

In some implementations, referring to FIGS. 1-6, the air inlet 15 includes at least one first air inlet 15a, and an opening direction of the first air inlet 15a is toward a width direction of the head-mounted display apparatus 100.

Here, that the opening direction of the first air inlet 15a is toward the width direction of the head-mounted display apparatus 100 may be toward the left of the head-mounted display apparatus 100, or toward the right of the head-mounted display apparatus 100, or a part of the first air inlets 15a are toward the left of the head-mounted display apparatus 100 and another part of the first air inlets 15a are toward the right of the head-mounted display apparatus 100.

In some implementations, by providing at least one first air inlet 15a with an opening direction toward the width direction of the head-mounted display apparatus 100, at least a portion of the airflow can flow along the width direction of the head-mounted display apparatus 100. In this way, it helps to increase the contact area between the airflow and the components in the electrical cavity 10a and prolong the contact time (the dimension of the head-mounted display apparatus 100 along the width direction is usually significantly larger than the dimensions along the front-rear direction and the height direction), thereby improving the cooling effect.

In some implementations, referring to FIGS. 1-6, the housing 10 includes a middle frame 12, and the first air inlet 15a is disposed on the middle frame 12. Specifically, the middle frame 12 includes two side walls 121 arranged opposite to each other along the width direction of the head-mounted display apparatus 100, and at least one side wall 121 is provided with at least one first air inlet 15a. It can be understood that in a projection along the width direction of the head-mounted display apparatus 100, the projection of the side wall 121 can usually cover the projections of most components in the electrical cavity 10a. Therefore, disposing the first air inlet 15a on the side wall 121 of the middle frame 12 helps to further increase the contact area between the airflow and the components in the electrical cavity 10a, thereby improving the cooling effect.

In some implementations, the two side walls 121 of the middle frame 12 are each provided with at least one first air inlet 15a. That is, opposite ends of the housing 10 along the width direction are each provided with at least one first air inlet 15a. In this way, it helps to further increase the air intake volume and the contact area between the airflow and the components in the electrical cavity 10a, improving the cooling effect.

In some implementations, referring to FIGS. 2-6, the air inlet 15 includes at least one second air inlet 15b. An opening direction of the second air inlet 15b is toward a second direction, or the opening direction of the second air inlet 15b is inclined toward the second direction relative to a first reference plane. As mentioned above, the second direction is opposite to the first direction, and the first reference plane is perpendicular to the first direction.

Here, the opening direction of the second air inlet 15b may be toward the second direction, or may be inclined toward the second direction relative to the first reference plane, or a part of the second air inlets 15b have opening directions toward the second direction and another part of the second air inlets 15b have opening directions inclined toward the second direction relative to the first reference plane.

In a case where the opening direction of the second air inlet 15b is inclined toward the second direction relative to the first reference plane, the second air inlet 15b may be inclined toward directions such as rear-left, rear-right, rear-up, rear-down, etc., and the specific inclination angle is not limited.

It can be understood that the airflow flowing into the air inlet 15 is usually relatively low-temperature airflow. In some implementations, the opening direction of the second air inlet 15b is set to be toward the second direction (that is, toward the wearer's face) or inclined toward the second direction relative to the first reference plane. In this way, the airflow flowing into the second air inlet 15b can first come into contact with the wearer's face, thereby reducing the stuffiness when the wearer wears the head-mounted display apparatus 100, taking away moisture from the user's facial area, and improving the wearing experience.

In some implementations where the opening direction of the second air inlet 15b is inclined toward the second direction relative to the first reference plane, further, the opening direction of the second air inlet 15b intersects with a second reference plane, and the second reference plane is perpendicular to the width direction of the head-mounted display apparatus 100. That is, the second air inlet 15b is inclined toward the rear-left or rear-right. In this way, it helps to increase the air intake volume and reduce direct contact between the airflow and the wearer's face, improving wearing comfort.

In some implementations, specifically, the opening direction of the second air inlet 15b is inclined toward a direction away from the first display assembly 20 relative to the second reference plane. In this way, direct contact between the airflow and the wearer's face is further reduced.

In some implementations where the opening direction of the second air inlet 15b is inclined toward the second direction relative to the first reference plane, further, the opening direction of the second air inlet 15b is parallel to a third reference plane, and the third reference plane is perpendicular to the height direction of the head-mounted display apparatus 100. That is, the opening direction of the second air inlet 15b is not offset upward or downward. In this way, it helps to reduce wind resistance and increase air intake volume.

In some implementations, referring to FIGS. 2-6, the housing 10 includes a rear shell 13, and the second air inlet 15b is disposed on the rear shell 13. In this way, it helps to further increase the probability that the airflow flowing into the second air inlet 15b comes into contact with the wearer's face, thereby further reducing the stuffiness when the wearer wears the head-mounted display apparatus 100.

In some implementations, referring to FIGS. 1-6, opposite sides of the housing 10 along the width direction of the head-mounted display apparatus 100 are respectively provided with at least one air inlet 15. In this way, it helps to increase the air intake volume.

Exemplarily, in some implementations, opposite sides of the housing 10 along the width direction of the head-mounted display apparatus 100 are respectively provided with at least one first air inlet 15a, and/or opposite sides of the housing 10 along the width direction of the head-mounted display apparatus 100 are respectively provided with at least one second air inlet 15b.

In some implementations, specifically, opposite sides of the housing 10 along the width direction of the head-mounted display apparatus 100 are respectively provided with one first air inlet 15a and one second air inlet 15b. In this way, while obtaining a good cooling effect, the stuffiness when the wearer wears the head-mounted display apparatus 100 is reduced, improving the wearing experience.

In some implementations, as mentioned above, the air outlet 14 of the housing 10 is located at a middle position of the housing 10 along the width direction, for example, located between the two view zones 10b. In some implementations, in cooperation with the air inlets 15 disposed on opposite sides of the housing 10 along the width direction, airflow will be enabled to flow from both sides of the housing 10 along the width direction toward the middle. In this way, components in the two view zones 10b (e.g., the two opto-mechanical modules 22 of the first display assembly 20) can both obtain a good cooling effect.

It should be noted that the arrangement manner of the air inlet 15 is not limited to the manner described above. For example, in some other implementations, at least one air inlet 15 may be disposed toward a side of the housing 10 along the height direction of the head-mounted display apparatus 100.

In some implementations, referring to FIG. 2 and FIGS. 5-7, the head-mounted display apparatus 100 includes a cooling fan 40. The housing 10 has an air inlet 15 and an air outlet 14 communicating with the electrical cavity 10a. The cooling fan 40 is configured to drive airflow from the air inlet 15 to the air outlet 14. The first display assembly 20, the control assembly 30, and the cooling fan 40 are sequentially arranged along the first direction.

It should be noted that in some implementations, the specific arrangement manner of the air inlet 15 and the air outlet 14 is not limited. For example, the manner shown above may be adopted, or any other suitable manner may be adopted.

In some implementations, the specific structural form of the cooling fan 40 is not limited, such as a centrifugal fan, an axial fan, etc.

That the first display assembly 20, the control assembly 30, and the cooling fan 40 are sequentially arranged along the first direction specifically means that when observed along the first direction, they are sequentially the first display assembly 20, the control assembly 30, and the cooling fan 40. In other words, at least a portion of the control assembly 30 is located between the first display assembly 20 and the cooling fan 40 along the first direction.

In some implementations, this stacking manner of the first display assembly 20, the control assembly 30, and the cooling fan 40 on one hand helps the airflow to contact both the first display assembly 20 and the control assembly 30 simultaneously, thereby cooling both. On the other hand, it helps to reduce the space occupation by the cooling fan 40 on opposite sides of the first display assembly 20 along the height direction and width direction of the head-mounted display apparatus 100, thereby helping to arrange a larger-sized first display assembly 20 under the same size of the housing 10, improving the wearer's user experience.

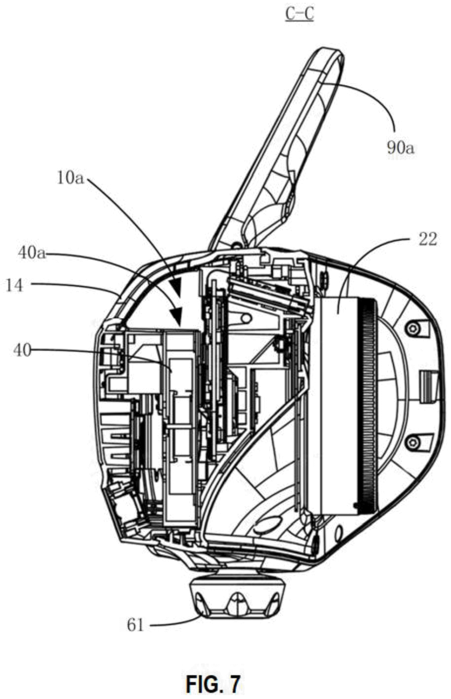

In some implementations, referring to FIG. 7, the cooling fan 40 includes a centrifugal fan. An axis of the centrifugal fan is parallel to the first direction, and a direction of a blowing side 40a of the centrifugal fan is perpendicular to the first direction.

Here, the axis of the centrifugal fan specifically refers to a rotation axis of the fan blades of the centrifugal fan. It can be understood that compared with an axial fan, a centrifugal fan has a smaller dimension in the axial direction. In this way, the occupation of space in the first direction by the cooling fan 40 can be reduced, reducing the thickness of the head-mounted display apparatus 100 along the first direction, and improving the wearing experience.

In some implementations, it can be understood that the centrifugal fan may have one blowing side 40a, or may have a plurality of blowing sides 40a. For example, one side or both sides of the centrifugal fan along the width direction of the head-mounted display apparatus 100, or one side or both sides along the height direction are formed as blowing sides 40a, or the circumferential surface of the centrifugal fan is integrally formed as a blowing side 40a.

In some implementations, the blowing side 40a of the centrifugal fan is disposed toward a top side of the head-mounted display apparatus 100. In a projection along the first direction, at least a portion of the projection of the air outlet 14 is located on the top side of the centrifugal fan. In this way, it helps to reduce the efficiency of airflow from the blowing side 40a of the centrifugal fan flowing to the air outlet 14 and reduce wind resistance, thereby improving the gas circulation efficiency in the electrical cavity 10a, and further helping to improve the cooling efficiency.

In some implementations, referring to FIG. 2, FIG. 5, and FIG. 6, the housing 10 has two view zones 10b distributed along a width direction of the head-mounted display apparatus 100, and an axis of the cooling fan 40 is located between the two view zones 10b.

Here, the axis of the cooling fan 40 specifically refers to a rotation axis of the fan blades of the cooling fan 40. In some implementations, by disposing the axis of the cooling fan 40 between the two view zones 10b, cooling of components in the two view zones 10b (e.g., cooling of the two opto-mechanical modules 22 of the first display assembly 20) can be realized with the aid of one cooling fan 40. This helps to reduce the overall weight and power consumption of the head-mounted display apparatus 100, improving wearing comfort and battery life.

Of course, in some other implementations, the head-mounted display apparatus 100 may include two cooling fans 40, and axes of the two cooling fans 40 are respectively located in the two view zones 10b.

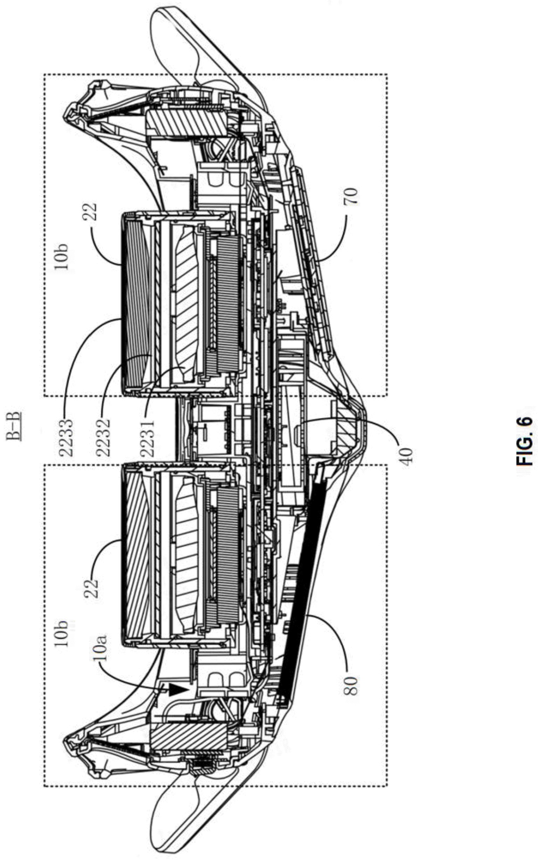

In some implementations, referring to FIGS. 5 and 6, opposite sides of the housing 10 along the width direction are respectively provided with at least one air inlet 15. The housing 10 has one air outlet 14. The air outlet 14 and the axis of the cooling fan 40 are disposed between the two view zones 10b. In this way, the cooling fan 40 can guide airflow to flow substantially along the direction indicated by the dashed arrows in FIG. 5, that is, guide airflow to flow in from opposite sides of the housing 10 along the width direction and contact components in the two view zones 10b respectively, and then flow out of the housing 10 from a position between the two view zones 10b.

In some implementations, referring to FIG. 2 and FIGS. 5-9, the control assembly 30 includes a circuit board and an electrical unit 31 disposed on the circuit board. The electrical unit 31 includes at least a first electrical unit 311. The first electrical unit 311 is disposed on a side of the circuit board facing the cooling fan 40. The cooling fan 40 is configured to drive airflow to flow through the first electrical unit 311.

Here, the specific structural form of the circuit board is not limited, such as a Flexible Printed Circuit (FPC) circuit board, a Printed Circuit Board (PCB) circuit board, etc. In some implementations, the thickness direction of the circuit board is the first direction.

The electrical unit 31 specifically refers to a functional unit disposed on the circuit board. The specific type of the electrical unit 31 can be specifically set by those skilled in the art according to the specific usage requirements of the head-mounted display apparatus 100, which is not limited in some implementations.

The electrical unit 31 may include a plurality of first electrical units 311, and the plurality of first electrical units 311 may be respectively configured to implement different functions of different head-mounted display apparatuses 100.

In some implementations, the first electrical unit 311 is disposed on a side of the circuit board facing the cooling fan 40, and the cooling fan 40 is configured to drive airflow to flow through the first electrical unit 311. In this way, a cooling effect on the first electrical unit 311 can be achieved.

In some implementations, referring to FIGS. 5 and 6, the head-mounted display apparatus includes a heat conduction body 41, and the heat conduction body 41 is disposed between the first electrical unit 311 and the cooling fan 40.

Here, the heat conduction body 41 specifically refers to a structural body made of a thermally conductive material. The specific structural form of the heat conduction body 41 is not limited. In some implementations, by disposing the heat conduction body 41 between the first electrical unit 311 and the cooling fan 40, it helps to passively conduct the heat of the first electrical unit 311 to the vicinity of the cooling fan 40. In cooperation with the active cooling of the cooling fan 40, a better cooling effect is achieved.

In some implementations, referring to FIGS. 5 and 6, the control assembly 30 includes a shielding body 33, and the shielding body 33 covers a side of the first electrical unit 311 away from the circuit board. The heat conduction body 41 is disposed between the shielding body 33 and the first electrical unit 311, and/or the heat conduction body 41 is disposed between the shielding body 33 and the cooling fan 40.

Here, the shielding body 33 is configured to reduce electromagnetic interference and provide protection for the first electrical unit 311. The specific structure of the shielding body 33 is not limited. Exemplarily, the shielding body 33 includes a metal shielding cover, and the first electrical unit 311 is disposed within a cavity enclosed by the metal shielding cover and the circuit board.

As mentioned above, the number of first electrical units 311 may be multiple. In such implementations, one shielding body 33 may cover sides of multiple first electrical units 311 away from the circuit board, or shielding bodies 33 may be disposed in one-to-one correspondence with the first electrical units 311, with one shielding body 33 covering one first electrical unit 311.

In some implementations, the heat conduction body 41 is disposed between the shielding body 33 and the first electrical unit 311 and/or the heat conduction body 41 is disposed between the shielding body 33 and the cooling fan 40. In this way, the cooling effect is further improved.

In some implementations, the heat conduction body 41 includes a thermal gel. The thermal gel has good elasticity. In this way, it can fit relatively closely to the corresponding structure, thereby achieving a better heat conduction effect. Of course, in some other implementations, the heat conduction body 41 may also include a solid structure.

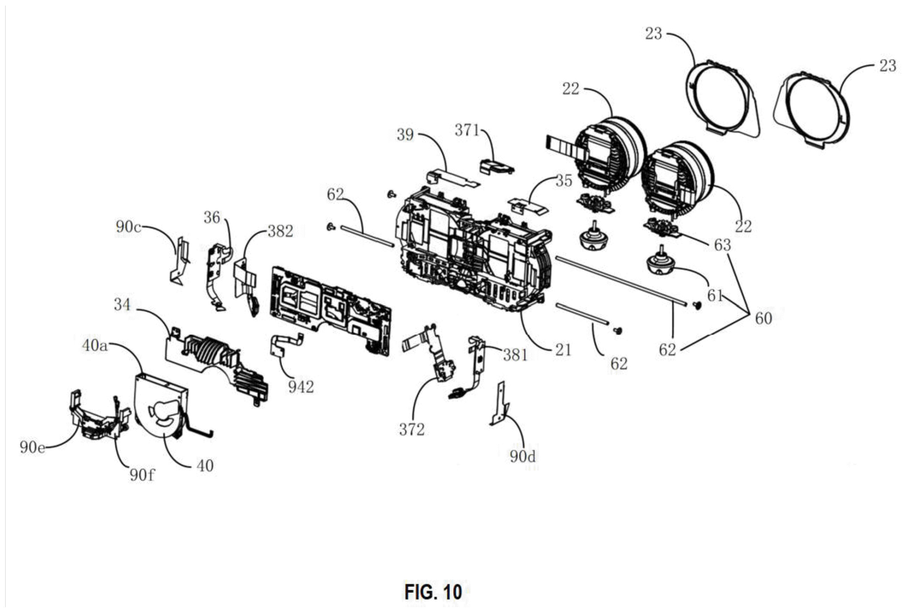

In some implementations, referring to FIGS. 2 and 10, the head-mounted display apparatus 100 includes a first heat sink 34. The first heat sink 34 is disposed on a side of the first electrical unit 311 facing the cooling fan 40. The first heat sink 34 includes a first heat dissipation fin 341 connected to the cooling fan 40.

Exemplarily, the first heat sink 34 may be connected to the cooling fan 40 (e.g., connected to a housing of the cooling fan 40) through connection methods such as welding, bonding, fastener connection, etc., or the first heat sink 34 may be formed as an integral structure with the housing of the cooling fan 40.

Exemplarily, the first heat sink 34 includes a first plate body 342 and a first heat dissipation fin 341 connected to the first plate body 342. The first plate body 342 is connected to the cooling fan 40 (e.g., connected to the housing of the cooling fan 40). The first plate body 342 and the first electrical unit 311 are arranged opposite to each other along the first direction.

A thickness direction of the first plate body 342 is parallel to the first direction. The first heat dissipation fin 341 protrudes from at least one side surface of the first plate body 342 along the thickness direction. Exemplarily, the first heat dissipation fin 341 protrudes from a side surface of the first plate body 342 along the first direction, that is, protrudes from a side surface of the first plate body 342 away from the first electrical unit 311. A side surface of the first plate body 342 facing the first electrical unit 311 forms a heat conduction surface.

In some implementations, the heat of the first electrical unit 311 can be transferred to the first heat sink 34, and the airflow blown by the cooling fan 40 can fully contact the first heat dissipation fin 341 of the first heat sink 34, thereby improving the cooling effect on the first electrical unit 311.

It should be noted that, as mentioned above, the number of first electrical units 311 may be multiple. In such implementations, first heat dissipation fins 341 may be disposed on a side of each first electrical unit 311 along the first direction, or first heat dissipation fins 341 may be disposed on a side of only a part of the first electrical units 311 along the first direction, and the heat of another part of the first electrical units 311 may be conducted to the housing of the cooling fan 40 instead of the first heat sink 34.

In some implementations, the head-mounted display apparatus 100 includes a heat conduction body 41, and the heat conduction body 41 conducts heat from the first electrical unit 311 to the first heat sink 34.

Taking the control assembly 30 including a shielding body 33 as an example, the heat conduction body 41 is disposed between the shielding body 33 and the first heat sink 34. Both side surfaces of the heat conduction body 41 are respectively in contact with the shielding body 33 and the first heat sink 34 (e.g., with the first plate body 342 of the first heat sink 34), thereby improving heat transfer efficiency.

In some implementations, the heat conduction body 41 helps to improve the efficiency of transferring heat from the first electrical unit 311 to the first heat sink 34, thereby helping to improve the cooling effect on the first electrical unit 311.

It should be noted that in some other implementations, the first heat sink 34 may not be provided, and the heat conduction body 41 conducts heat from the first electrical unit 311 to the housing of the cooling fan 40. In some other implementations, the heat conduction body 41 may not be provided, and the first heat sink 34 may be disposed to fit with the shielding body 33 or fit with the first electrical unit 311, so that the heat of the first electrical unit 311 is conducted to the first heat sink 34.

In some implementations, referring to FIGS. 2 and 10, the cooling fan 40 includes a centrifugal fan. The blowing side 40a of the cooling fan 40 is disposed toward the top side of the head-mounted display apparatus 100. At least a portion of the first heat dissipation fins 341 are disposed on the top side of the cooling fan 40 and extend along the height direction of the head-mounted display apparatus 100 (the thickness direction of this portion of the first heat dissipation fins 341 is perpendicular to the height direction). In this way, the airflow blown by the cooling fan 40 can fully contact the first heat dissipation fins 341, improving the cooling effect.

In some implementations, referring to FIGS. 2 and 10, at least one side of the housing 10 along the width direction is provided with an air inlet 15. At least a portion of the first heat dissipation fins 341 extend along the width direction of the head-mounted display apparatus 100 (the thickness direction of this portion of the first heat dissipation fins 341 is perpendicular to the width direction). In this way, the airflow flowing into the air inlet 15 can fully contact the first heat dissipation fins 341, improving the cooling effect.

In some implementations, referring to FIGS. 2 and 10, the housing 10 has an air outlet 14. At least a portion of the first heat dissipation fins 341 are arranged opposite to the air outlet 14 along the first direction. In this way, the airflow fully contacts the first heat dissipation fins 341 before flowing out of the air outlet 14, improving the cooling effect.

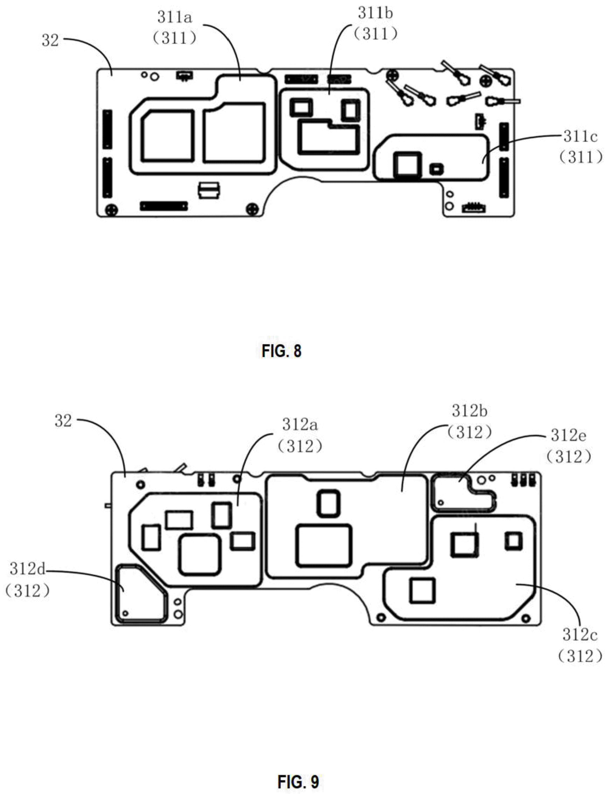

In some implementations, referring to FIG. 9, the first electrical unit 311 includes at least one of the following: a main control unit 311a, a Wi-Fi unit 311b, or a main battery unit 311c.

Here, the main control unit 311a specifically refers to a unit configured to implement the main functions of the head-mounted display apparatus 100, for example, a unit configured to control the first display assembly 20 to display an image.

The Wi-Fi unit 311b refers to a unit configured to implement Wi-Fi communication functions. Exemplarily, referring to FIG. 10, the control assembly 30 includes a Wi-Fi antenna 35, and the Wi-Fi antenna 35 is electrically connected to the Wi-Fi unit 311b. Further exemplarily, the Wi-Fi antenna 35 is disposed on a side of the first display assembly 20 along the height direction. Still further exemplarily, the Wi-Fi antenna 35 is disposed on a top side of one of the opto-mechanical modules 22 of the first display assembly 20. In this way, it helps to reduce shielding and improve the radiation intensity of Wi-Fi signals.

The main battery unit 311c refers to a unit configured to power main electrical components in the head-mounted display apparatus 100. Exemplarily, the main battery unit 311c is at least configured to power the first display assembly 20. It should be noted that in some implementations, the main battery unit 311c may be the only battery unit of the head-mounted display apparatus 100. In some other implementations, the head-mounted display apparatus 100 may include other battery units, but the main battery unit 311c is the battery unit with the largest capacity among the battery units of the head-mounted display apparatus 100.

Exemplarily, the control assembly 30 includes a charging interface 36 connected to the main battery unit 311c.

It can be understood that the above several first electrical units 311 all belong to electrical units 31 with relatively large heat generation. In some implementations, by disposing one or more of the above electrical units 31 with relatively large heat generation on the side of the circuit board facing the cooling fan 40, these electrical units 31 can obtain a better cooling effect.

In some implementations, referring to FIGS. 5-7 and 9, the electrical unit 31 includes at least a second electrical unit 312. The second electrical unit 312 is disposed on a side of the circuit board facing the first display assembly 20. The cooling fan 40 is configured to drive airflow to flow through the second electrical unit 312.

In some implementations, the first electrical unit 311 and the second electrical unit 312 are respectively disposed on opposite sides of the circuit board in the thickness direction. In this way, it helps to improve the structural compactness of the control assembly 30 and reduce the occupation of space within the housing 10 by the control assembly 30.

In some implementations, a gap is formed between the second electrical unit 312 and the first display assembly 20 for airflow to flow.

In this way, on one hand, it helps the airflow to fully contact the first display assembly 20 and the second electrical unit 312. On the other hand, it helps to reduce thermal disturbance between the first display assembly 20 and the second electrical unit 312. In summary, it helps to improve the cooling effect on the first display assembly 20 and the second electrical unit 312.

In some implementations, referring to FIG. 9, the second electrical unit 312 includes at least one of the following: a radio frequency unit 312a, a storage unit 312b, an audio unit 312c, an auxiliary battery unit 312d, or a Bluetooth unit 312e.

The radio frequency unit 312a refers to a unit configured to implement transmission and reception functions of radio frequency signals. Exemplarily, the head-mounted display apparatus 100 includes an antenna 90, and the antenna 90 is electrically connected to the radio frequency unit 312a.

The storage unit 312b refers to a unit configured to implement data storage and export functions. Exemplarily, the storage unit 312b includes a Universal Flash Storage (UFS) unit. Exemplarily, the control assembly 30 includes a storage interface. The storage interface is exposed on the surface of the housing 10 and electrically connected to the storage unit 312b (e.g., electrically connected to the storage unit 312b through an FPC). The storage interface is configured to electrically connect an external storage device to the storage unit 312b. Exemplarily, referring to FIG. 10, the storage interface includes at least one of a Secure Digital (SD) card interface 371 or a Universal Serial Bus (USB) interface 372. The SD card interface 371 may be set to be exposed on the inner surface of the housing 10. The USB interface 372 may be set to be exposed on the outer surface of the housing 10, for example, exposed on a side outer surface of the housing 10 along the width direction or height direction.

The audio unit 312c refers to a unit configured to implement audio capture and/or playback functions. Exemplarily, referring to FIGS. 5 and 10, the head-mounted display apparatus 100 includes a sound device 91. The control assembly 30 includes a first audio adapter 381 (e.g., FPC). The first audio adapter 381 electrically connects the sound device 91 to the audio unit 312c. As another example, the head-mounted display apparatus 100 includes a sound receiving device 92. The control assembly 30 includes a second audio adapter 382 (e.g., FPC). The second audio adapter 382 electrically connects the sound receiving device 92 to the audio unit 312c.

As mentioned above, the first electrical unit 311 may include a main battery unit 311c. Here, the auxiliary battery unit 312d is a battery unit with a relatively lower capacity compared to the main battery unit 311c. In some implementations, the auxiliary battery unit 312d is configured to power at least one of the cooling fan 40 or the radio frequency unit 312a. By using the auxiliary battery unit 312d independent of the main battery unit 311c to power the cooling fan 40 and the radio frequency unit 312a, it helps to improve the reliability of the cooling function and/or communication function of the head-mounted display apparatus 100.

The Bluetooth unit 312e refers to a unit configured to implement Bluetooth functions. Exemplarily, the control assembly includes a Bluetooth antenna 39 connected to the Bluetooth unit 312e.

It can be understood that the heat generation of the second electrical unit 312 mentioned above is significantly lower than that of the first electrical unit 311 mentioned above. In some implementations, by disposing the high heat generation electrical unit 31 and the low heat generation electrical unit 31 respectively on opposite sides of the circuit board, it helps to reduce thermal crosstalk and improve the cooling effect.

In some implementations, referring to FIG. 2, FIG. 5, FIG. 6, and FIG. 10, the housing 10 has an air inlet 15 and an air outlet 14 communicating with the electrical cavity 10a. The head-mounted display apparatus 100 includes a cooling fan 40. The first display assembly 20 includes a bracket 21 and an opto-mechanical module 22 disposed on the bracket 21. The bracket 21 forms an air duct 21a. At least a portion of the opto-mechanical module 22 is disposed within the air duct 21a. The cooling fan 40 is configured to drive at least a portion of airflow from the air inlet 15 to the air outlet 14 via the air duct 21a.

In some implementations, the specific arrangement manner of the air inlet 15, the air outlet 14, and the cooling fan 40 is not limited. For example, the manner described in any of the above implementations may be adopted, or any other suitable manner may be adopted.

The first display assembly 20 includes a bracket 21 and an opto-mechanical module 22 disposed on the bracket 21. The bracket 21 is configured to support and fix the opto-mechanical module 22 so that the opto-mechanical module 22 is maintained at a suitable position, for example, maintained at a position opposite to the wearer's eyes.

The specific structural form of the bracket 21 is not limited, as long as it can realize supporting and fixing the opto-mechanical module 22 and form the air duct 21a. At least a portion of the opto-mechanical module 22 is disposed within the air duct 21a. Exemplarily, one end of the opto-mechanical module 22 along the first direction is disposed within the air duct 21a, and one end along the second direction is disposed outside the air duct 21a.

In some implementations, the bracket 21 forms the air duct 21a, and at least a portion of the opto-mechanical module 22 is disposed within the air duct 21a. In this way, the opto-mechanical module 22 can fully contact the airflow, which in turn helps to improve the cooling effect on the opto-mechanical module 22.

In some implementations, at least a portion of the control assembly 30 is located within the air duct 21a. In this way, the cooling effect on the control assembly 30 is improved.

In some implementations, referring to FIGS. 5 and 6, the control assembly 30 is spaced apart from the bracket 21 along the first direction. In this way, it helps to reduce thermal crosstalk between the control assembly 30 and the opto-mechanical module 22, improving the cooling effect on the opto-mechanical module 22. In such implementations, the gap between the control assembly 30 and the bracket 21 along the first direction is equivalent to forming another gas channel relatively independent of the air duct 21a. The cooling fan 40 is configured to drive a portion of the airflow flowing in from the air inlet 15 to flow to the air outlet 14 via the air duct 21a, and another portion of the airflow to flow to the air outlet 14 via the gap between the control assembly 30 and the bracket 21 along the first direction.

In some implementations, referring to FIGS. 5 and 6, the air duct 21a extends along a width direction of the head-mounted display apparatus 100, and at least one end of the bracket 21 along the width direction has an air duct inlet 21b communicating the air duct 21a with the air inlet 15.

In this way, the airflow in the air duct 21a will flow substantially along the width direction of the housing 10. This helps to increase the contact area and contact duration between the airflow and the opto-mechanical module 22, thereby helping to further improve the cooling effect on the opto-mechanical module 22.

In some implementations, referring to FIG. 2, the bracket 21 has air duct inlets 21b at opposite ends along the width direction. The first display assembly 20 includes two opto-mechanical modules 22 distributed along the width direction. The bracket 21 has an air duct outlet 21c communicating the air duct 21a with the air outlet 14. The air duct outlet 21c is located between the two opto-mechanical modules 22 along the width direction.

In some implementations, airflow will flow into the air duct 21a from both ends of the bracket 21 along the width direction respectively, flow through the two opto-mechanical modules 22 respectively, and then flow out from between the two opto-mechanical modules 22. This arrangement manner helps to reduce thermal crosstalk between the two opto-mechanical modules 22, and enables both opto-mechanical modules 22 to fully contact cold air, improving the cooling effect on the two opto-mechanical modules 22.

In the above implementation, exemplarily, opposite ends of the housing 10 along the width direction of the head-mounted display apparatus 100 are respectively provided with at least one air inlet 15. The air outlet 14 is located between the two opto-mechanical modules 22 along the width direction. The axis of the cooling fan 40 passes through the air duct outlet 21c. In this way, it is realized to drive airflow to flow into the housing 10 from both sides of the housing 10 along the width direction and enter the air duct 21a via the air duct inlet 21b, and then leave the air duct 21a via the air duct outlet 21c and leave the electrical cavity 10a via the air outlet 14.

In some implementations, referring to FIGS. 5, 6, 10, and 11, the opto-mechanical module 22 includes a display screen 221 and a second heat sink 222 disposed on a side of the display screen 221 along the first direction. The second heat sink 222 includes a second heat dissipation fin 2221, and the second heat dissipation fin 2221 is located within the air duct 21a.

It can be understood that the display screen 221 is the main heat generating component of the opto-mechanical module 22. Compared with the display screen 221, the second heat sink 222 has a larger contact area with the airflow. In this way, it helps to improve the cooling effect.

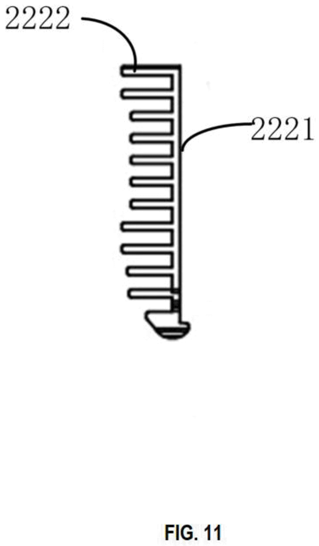

Exemplarily, referring to FIG. 11, the second heat sink 222 includes a second plate body 2222 and a second heat dissipation fin 2221. A side of the second plate body 2222 facing the display screen 221 forms a heat conduction surface. The second heat dissipation fin 2221 protrudes from a side surface of the second plate body 2222 away from the display screen 221.

Exemplarily, the extension direction of the second heat dissipation fin 2221 is the same as the airflow direction in the air duct 21a. For example, in some implementations where the air duct 21a extends along the width direction of the head-mounted display apparatus 100, the second heat dissipation fin 2221 extends along the width direction. In this way, the contact area between the airflow and the second heat dissipation fin 2221 is increased and the wind resistance in the air duct 21a is reduced.

Referring to FIG. 10, the first display assembly 20 further includes a shielding sheet 23 disposed on a side of the opto-mechanical module 22 along the second direction.

In some implementations, referring to FIGS. 5 and 6, the head-mounted display apparatus 100 includes a heat conduction body 41, and the heat conduction body 41 is disposed between the display screen 221 and the second heat sink 222. In this way, the efficiency of heat conduction from the display screen 221 to the second heat sink 222 is improved, further improving the cooling effect.

In some implementations, as mentioned above, the heat conduction body 41 includes a thermal gel. In this way, the heat conduction effect is improved.

In some implementations, referring to FIGS. 2 and 3, the head-mounted display apparatus 100 includes a face shield 50 disposed on a side of the housing 10 along a second direction. The second direction is opposite to the first direction. The face shield 50 encloses with the housing 10 to form a shield cavity 50a. At least one air inlet 15 communicates the shield cavity 50a with the electrical cavity 10a.

Here, the face shield 50 is configured to cover the wearer's face and keep the wearer's nose root and eyes within the shield cavity 50a. In this way, a relatively private display space is formed, allowing the wearer to obtain an immersive viewing experience.

The specific structural form of the face shield 50 is not limited. Exemplarily, the face shield 50 is set as a flexible structure, for example, set as a structure made of silicone material. In this way, on one hand, the degree of fit between the face shield 50 and the wearer's face is improved, and on the other hand, wearing comfort is improved.

Exemplarily, one end of the first display assembly 20 along the second direction extends into the shield cavity 50a.

It can be understood that in a case where the wearer correctly wears the head-mounted display apparatus 100, the shield cavity 50a forms a relatively closed space with poor airflow mobility. This leads to easy generation of water vapor in the shield cavity 50a due to the wearer's breathing and/or changes in the external environment, which in turn causes the first window 20a of the first display assembly 20 to fog up and/or causes the wearer to feel stuffy, affecting the wearer's user experience.

In some implementations, at least one air inlet 15 communicates the shield cavity 50a with the electrical cavity 10a. In this way, the air mobility in the shield cavity 50a can be improved, reducing the probability of the first window 20a of the first display assembly 20 fogging up and/or defogging when fogging occurs, and reducing the stuffiness during wearing, improving the user experience.

In some implementations, referring to FIG. 2, the face shield 50 has at least one vent 50b, and the vent 50b communicates the shield cavity 50a with an external environment. During actual use, external air can enter the shield cavity 50a via the vent 50b, and then leave the shield cavity 50a and enter the electrical cavity 10a via the air inlet 15. In this way, it helps to further improve the air mobility in the shield cavity 50a.

In some implementations, referring to FIGS. 2, 3, and 4, the air inlet 15 includes at least one second air inlet 15b. The second air inlet 15b communicates the shield cavity 50a with the electrical cavity 10a. The vent 50b and the second air inlet 15b are distributed along a width direction of the head-mounted display apparatus 100.

As mentioned above, the opening direction of the second air inlet 15b is toward the second direction, or the opening direction of the second air inlet 15b is inclined toward the second direction relative to the first reference plane.

In some implementations, the vent 50b and the second air inlet 15b are set to be distributed along the width direction of the head-mounted display apparatus. In this way, it helps the airflow in the shield cavity 50a to flow substantially along the width direction of the head-mounted display apparatus 100, increasing the contact area between the airflow and the first window 20a of the first display assembly 20, thereby improving the defogging effect.

In some implementations, referring to FIGS. 2, 3, and 4, the first display assembly 20 includes two opto-mechanical modules 22 distributed along the width direction. At least one second air inlet 15b is disposed on opposite sides of the first display assembly 20 along the width direction.

At least one vent 50b is located between the two opto-mechanical modules 22 along the width direction. Exemplarily, the face shield 50 has a nose pad for cooperating with the wearer's nose. The nose pad is located between the two opto-mechanical modules 22 along the width direction. The fitting gap between the nose pad and the wearer's nose forms one vent 50b.

And/or, in a projection along a height direction of the head-mounted display apparatus 100, projections of the two opto-mechanical modules 22 respectively overlap with projections of at least one vent 50b. Exemplarily, at least one vent 50b can be formed on the top side and/or bottom side of each opto-mechanical module 22 by punching holes in the face shield 50.

In some implementations, referring to FIG. 3, airflow will flow substantially along the direction indicated by the dashed arrows in FIG. 3. Specifically, external air will flow into the shield cavity 50a from a position between the two opto-mechanical modules 22 and/or positions on the top side and/or bottom side of the two opto-mechanical modules 22, and then flow to both sides and flow into the electrical cavity 10a via the second air inlets 15b on both sides. This allows the display surfaces of both opto-mechanical modules 22 to fully contact the airflow, thereby improving the defogging effect.

In some implementations, the head-mounted display apparatus 100 includes a cooling fan 40. The cooling fan 40 is configured to drive airflow from the shield cavity 50a to the electrical cavity 10a via the air inlet 15. The cooling fan 40 has a heat dissipation mode and a defogging mode, and power of the cooling fan 40 in the defogging mode is greater than power of the cooling fan 40 in the heat dissipation mode. The user can turn on the defogging mode through a physical operation key or a virtual operation key disposed on the head-mounted display apparatus.

Exemplarily, in the heat dissipation mode, the driving ability of the cooling fan 40 for airflow is relatively weak. The airflow mainly flows in the electrical cavity 10a. The gas flow velocity in the shield cavity 50a is low. The wearer basically cannot feel the airflow in the shield cavity 50a or only has a slight feeling, improving the wearer's wearing comfort. In a case where the first window 20a of the first display assembly 20 fogs up, the cooling fan 40 can be adjusted to the defogging mode. At this time, the power of the cooling fan 40 increases, the driving ability for airflow is enhanced, and the gas flow velocity in the shield cavity 50a increases, thereby achieving a rapid defogging effect.

In the above multiple implementations, the heat dissipation scheme and defogging scheme of the head-mounted display apparatus 100 have been described. Those skilled in the art should understand that the schemes in the above multiple implementations can be used in combination. The following will be further explained in conjunction with a specific implementation.

Referring to FIGS. 1-11, the head-mounted display apparatus 100 includes a housing 10, a first display assembly 20, a control assembly 30, a second display assembly 70, and a face shield 50. The face shield 50 is disposed on a side of the housing 10 along the second direction. The housing 10 has an electrical cavity 10a. The face shield 50 encloses with the housing 10 to form a shield cavity 50a.

The control assembly 30 and the cooling fan 40 are disposed within the electrical cavity 10a. One end of the first display assembly 20 along the first direction is located within the electrical cavity 10a, and one end along the second direction extends into the shield cavity 50a. The first display assembly 20, the control assembly 30, and the cooling fan 40 are sequentially arranged along the first direction.

The housing 10 specifically has one air outlet 14 and four air inlets 15. The cooling fan 40 is configured to drive airflow from the four air inlets 15 to the air outlet 14.

The housing 10 includes two view zones 10b distributed along the width direction of the head-mounted display apparatus 100. The air outlet 14 is located between the two view zones 10b along the width direction. The opening direction of the air outlet 14 is toward the first direction, or the opening direction of the air outlet 14 is inclined toward the first direction relative to the first reference plane.

Exemplarily, the angle between the opening direction of the air outlet 14 and the first reference plane is greater than or equal to 30 degrees. Exemplarily, the opening direction of the air outlet 14 is parallel to the second reference plane, and the second reference plane is a plane perpendicular to the width direction of the head-mounted display apparatus 100. Exemplarily, the opening direction of the air outlet 14 points to the top side of the third reference plane, and the third reference plane is a plane perpendicular to the height direction of the head-mounted display apparatus 100.

The four air inlets 15 include two first air inlets 15a and two second air inlets 15b. The two first air inlets 15a are respectively disposed at opposite ends of the housing 10 along the width direction and open toward the width direction. The two second air inlets 15b are respectively located on opposite sides of the first display assembly 20 along the second direction and open toward the second direction or are inclined toward the second direction relative to the first reference plane. The second air inlets 15b communicate the shield cavity 50a with the electrical cavity 10a.

Exemplarily, the opening direction of the second air inlet 15b is inclined toward the second direction relative to the first reference plane. Exemplarily, the opening direction of the second air inlet 15b intersects with the second reference plane. Exemplarily, the opening direction of the second air inlet 15b is inclined toward a direction away from the first display assembly 20 relative to the second reference plane. Exemplarily, the opening direction of the second air inlet 15b is parallel to the third reference plane.

The cooling fan 40 is set as a centrifugal fan. The axis of the cooling fan 40 is located between the two view zones 10b. The blowing side 40a of the cooling fan 40 is toward the top side of the head-mounted display apparatus 100. In a projection along the first direction, the projection of the air outlet 14 is located on the top side of the cooling fan 40.

The control assembly 30 includes a circuit board, at least one first electrical unit 311 disposed on a side of the circuit board facing the cooling fan 40, and at least one second electrical unit 312 disposed on a side of the circuit board facing the first display assembly 20. The first electrical unit 311 includes at least one of the following: a main control unit 311a, a Wi-Fi unit 311b, or a main battery unit 311c. The second electrical unit 312 includes at least one of the following: a radio frequency unit 312a, a storage unit 312b, an audio unit 312c, or an auxiliary battery unit 312d.

The head-mounted display apparatus 100 further includes a first heat sink 34. The first heat sink 34 includes a first plate body 342 and a first heat dissipation fin 341 connected thereto. The first plate body 342 is connected to the cooling fan 40. The first heat dissipation fin 341 protrudes from a side surface of the first plate body 342 along the first direction, that is, protrudes from a side surface of the first plate body 342 away from the first electrical unit 311.

The control assembly 30 includes a shielding body 33. The shielding body 33 covers a side surface of the first electrical unit 311 away from the circuit board. A heat conduction body 41 is disposed between the first electrical unit 311 and the shielding body 33 and/or between the shielding body 33 and the first plate body 342 of the first heat sink 34.

The first display assembly 20 includes a bracket 21 and two opto-mechanical modules 22 distributed along the width direction. The bracket 21 has an air duct 21a. At least a portion of the opto-mechanical module 22 is located within the air duct 21a. The control assembly 30 forms a gap with the bracket 21 along the first direction.

The air duct 21a extends along the width direction of the head-mounted display apparatus 100. Opposite ends of the bracket 21 along the width direction both have air duct inlets 21b. The bracket 21 has an air duct outlet 21c communicating the air duct 21a with the air outlet 14. The air duct outlet 21c is located between the two opto-mechanical modules 22 along the width direction.

The opto-mechanical module 22 includes a display screen 221 and a second heat sink 222 disposed on a side of the display screen 221 along the first direction. A heat conduction body 41 is disposed between the display screen 221 and the second heat sink 222. The second heat sink 222 includes a second heat dissipation fin 2221. The second heat dissipation fin 2221 is located within the air duct 21a.

The face shield 50 has a vent. At least one vent is located between the two opto-mechanical modules 22. Exemplarily, the face shield 50 includes a nose pad for cooperating with the wearer's nose. The vent is formed by a fitting gap between the nose pad and the wearer's nose. At least one vent is disposed on the top side of each of the two opto-mechanical modules 22.

Referring to FIGS. 3, 5, and 6, when the cooling fan 40 works, a portion of the airflow enters the shield cavity 50a through the vent of the face shield 50, flows through the two opto-mechanical modules 22, and then enters the electrical cavity 10a via the second air inlet. Another portion of the airflow directly enters the electrical cavity 10a through the first air inlet.

The airflow entering the electrical cavity 10a flows from positions at both ends of the electrical cavity 10a along the width direction toward the middle position. A portion of the airflow enters the air duct 21a via the air duct inlet 21b, exchanges heat with the first display assembly 20, and then flows to the air outlet 14 via the air duct outlet 21c. Another portion of the airflow flows to the air outlet 14 via the gap between the bracket 21 and the control assembly 30.

The cooling fan 40 has a heat dissipation mode and a defogging mode. The power in the defogging mode is greater than the power in the heat dissipation mode. In the heat dissipation mode, the airflow rate in the shield cavity 50a is relatively small. In the defogging mode, the airflow rate in the shield cavity 50a increases, realizing rapid defogging. The user can turn on the defogging mode through a physical operation key or a virtual operation key disposed on the head-mounted display apparatus.

The other structures in the head-mounted display apparatus 100 of the first implementation will be introduced below.

In some implementations, referring to FIGS. 1-4 and 10, the first display assembly 20 includes an opto-mechanical module 22. The head-mounted display apparatus 100 includes an adjustment assembly 60. The adjustment assembly 60 is configured to adjust an optical parameter of the opto-mechanical module 22.

Here, the optical parameter of the opto-mechanical module 22 includes but is not limited to interpupillary distance, diopter, etc. The specific structural form of the adjustment assembly 60 can be specifically determined by those skilled in the art according to the optical parameters that actually need to be adjusted, which is not limited in some implementations.

In some implementations, the optical parameter of the opto-mechanical module 22 can be adjusted through the adjustment assembly 60. In this way, the adaptability of the head-mounted display apparatus 100 to wearers with different visual conditions is improved.

In some implementations, referring to FIGS. 5, 6, and 10, the first display assembly 20 includes two opto-mechanical modules 22 distributed along the width direction of the head-mounted display apparatus 100. Each opto-mechanical module 22 includes a display screen 221 and a lens group 223 disposed opposite to the display screen 221.

Here, the lens group 223 is specifically disposed on a side of the display screen 221 along the second direction. Light emitted by the display screen 221 enters the wearer's eyes after being refracted by lenses in the lens group 223. The specific arrangement manner of the lens group 223 can refer to related technologies in the art, which will not be repeated here.

Exemplarily, referring to FIG. 6, along a direction away from the display screen 221 (that is, along the second direction), the lens group 223 sequentially includes a first lens 2231, a second lens 2232, and a third lens 2233. Exemplarily, the first lens 2231 and the third lens 2233 are resin lenses, and the second lens 2232 is a glass lens. Exemplarily, the first lens 2231 and the third lens 2233 are convex lenses, and the second lens 2232 is a planar lens. The adjustment assembly 60 is configured to adjust a spacing of the lens groups 223 of the two opto-mechanical modules 22 along the width direction, and/or the adjustment assembly 60 is configured to adjust diopter of the lens groups 223 of the two opto-mechanical modules 22.

In some implementations, the adjustment assembly 60 can adjust the interpupillary distance and/or diopter, thereby improving the adaptability of the head-mounted display apparatus 100 to wearers with different visual conditions.

In some implementations, referring to FIG. 10, the adjustment assembly 60 includes two adjustment knobs 61 in transmission connection with the lens groups 223 of the two opto-mechanical modules 22 respectively. The adjustment knobs 61, when rotated, drive at least one lens in the lens groups 223 to move to change diopter of the lens groups 223. Moreover, the adjustment knobs 61 are in sliding fit with the housing 10 along the width direction. The adjustment knobs 61, when moving relative to the housing 10 along the width direction, drive the lens groups 223 to move along the width direction.

Exemplarily, referring to FIG. 10, the adjustment assembly 60 includes a guide rail 62 extending along the width direction of the head-mounted display apparatus 100. The first display assembly 20 includes a bracket 21. The guide rail 62 is disposed on the bracket 21. The opto-mechanical module 22 is in sliding fit with the guide rail 62 along the width direction of the head-mounted display apparatus 100. Further exemplarily, the adjustment assembly 60 may include a plurality of guide rails 62 distributed along the height direction of the head-mounted display apparatus. In this way, the sliding stability of the opto-mechanical module 22 is improved. Further, at least one guide rail 62 may be in sliding fit with two opto-mechanical modules 22 simultaneously, or at least one guide rail 62 may be in sliding fit with only one of the opto-mechanical modules 22. Those skilled in the art can specifically set this according to actual spatial layout requirements. In some implementations, the plurality of guide rails 62 include at least one long guide rail and at least one set of short guide rails. The long guide rail is set to be able to be in sliding fit with two opto-mechanical modules 22 simultaneously. Each set of short guide rails includes two short guide rails respectively used for sliding fit with the opto-mechanical modules 22. Along the sliding fit direction (that is, the width direction), the length of the long guide rail is greater than the length of the short guide rail. Exemplarily, the housing 10 includes a nose pad area. The long guide rail is disposed on the top side of the nose pad area, and the short guide rails are disposed on opposite sides of the nose pad area along the width direction, thereby realizing avoidance of the nose pad area.

The adjustment knob 61 is connected to at least one lens in the lens group 223 through a gear set 63. When the adjustment knob 61 is rotated, it drives gears in the gear set 63 to rotate, which in turn drives the lens to rotate around its own optical axis. The lens is set to have different refractive indices at different positions along the circumferential direction. In this way, when the lens rotates, the diopter of the lens group 223 changes, realizing diopter adjustment.

When the adjustment knob 61 is pushed along the width direction of the housing 10, the gear set 63 does not rotate. The force is transmitted to the opto-mechanical module 22, thereby driving the opto-mechanical module 22 to slide along the guide rail 62, causing the spacing between the two opto-mechanical modules 22 along the width direction to change, realizing interpupillary distance adjustment.

In some implementations, only one set of adjustment knobs 61 needs to be provided to realize interpupillary distance adjustment and diopter adjustment. In this way, it helps to simplify the structure of the adjustment assembly 60 and improve the operation convenience for the wearer when adjusting optical parameters, reducing learning costs.

In some implementations, referring to FIGS. 1 and 11, the head-mounted display apparatus 100 includes a second display assembly 70 disposed on the housing 10. The second display assembly 70 has a second window 70a exposed on at least one outer surface of the housing 10.

It can be understood that since the second window 70a of the second display assembly 70 is exposed on the outer surface of the housing 10, the content displayed by the second display assembly 70 can be observed by a non-wearer. The specific structural form of the second display assembly 70 is not limited, as long as it can realize image display.

The second window 70a of the second display assembly 70 may be exposed on one of the outer surfaces of the housing 10, or may be simultaneously exposed on multiple outer surfaces of the housing 10, which is not limited.

The number of second display assemblies 70 may be one, or may be multiple.

The second display assembly 70 may be specifically set to have multiple display states such as an image transmission display state, a parameter display state, a query display state, a wallpaper display state, etc. These display states will be described in more detail and specifically in the relevant parts below, and will not be repeated here.

In a case where the number of second display assemblies 70 is multiple, different second display assemblies 70 may be configured to have different display states, and/or the display states of different second display assemblies 70 may be independently controlled.

In some implementations, by adding the second display assembly 70, the usage scenarios of the head-mounted display apparatus 100 can be expanded, improving the playability of the head-mounted display apparatus 100.

In some implementations, the first display assembly 20, the control assembly 30, and the second display assembly 70 are sequentially arranged along the first direction. The control assembly 30 is located between the first display assembly 20 and the second display assembly 70. In this way, it helps to save the installation space of the second display assembly 70, so that the size of the display interface of the second display assembly 70 can also be increased.

In some implementations, referring to FIG. 11, the second window 70a is oriented toward the first direction. In this way, it helps to increase the display area of the second window 70a, and makes the second window 70a easier to be observed by a non-wearer.

Exemplarily, the housing 10 includes two view zones 10b distributed along the width direction of the head-mounted display apparatus 100. The second display assembly 70 is disposed in at least one view zone 10b. It can be understood that in such implementations, the second display assembly 70 and the opto-mechanical module 22 of the first display assembly 20 are arranged opposite to each other along the first direction.

As another example, the housing 10 includes a front shell 11. The front shell 11 includes a third frame body 111 and a fourth frame body 113. The second display assembly 70 is disposed in at least one of the third frame body 111 or the fourth frame body 113.

In some implementations, referring to FIG. 11, the second display assembly 70 includes an outer screen assembly 71 and an outer screen adapter 72 (e.g., FPC). The outer screen adapter 72 electrically connects the outer screen assembly 71 to the control assembly 30. The control assembly 30 is configured to control the second display assembly 70 to display an image.

In some implementations, referring to FIG. 11, the head-mounted display apparatus 100 includes an interaction assembly 80 configured to receive an interaction command. The interaction command is configured to control a display state of the first display assembly 20 and/or the second display assembly 70.

Here, the interaction assembly 80 may be any structure capable of interacting with the wearer and/or non-wearer. The specific interaction manner of the interaction assembly 80 interacting with the wearer and/or non-wearer is not limited, such as contact interaction (e.g., interaction through touch, keys, levers, rollers, etc.), or non-contact interaction (e.g., interaction through wireless signals).

The specific control manner when controlling the display state of the first display assembly 20 and/or the second display assembly 70 based on the interaction command of the interaction assembly 80 will be described in more detail and specifically in the relevant parts below, and will not be repeated here.

In some implementations, the wearer can flexibly control the display state of the first display assembly 20 and/or the second display assembly 70 through the interaction assembly 80. In this way, the playability of the head-mounted display apparatus 100 is further improved.

In some implementations, referring to FIG. 11, the interaction assembly 80 has an operation surface 80a exposed on at least one outer surface of the housing 10. Here, the operation surface 80a specifically refers to a surface for the wearer or non-wearer to input an interaction command in a contact manner (e.g., touch, press, toggle, etc.).

In some implementations, the interaction assembly 80 realizes interaction with the aid of the operation surface 80a. The operation surface 80a is exposed on at least one outer surface of the housing 10. In this way, both the wearer and the non-wearer can interact with the interaction assembly 80 relatively conveniently, further expanding the usage scenarios of the head-mounted display apparatus 100 and improving the playability of the head-mounted display apparatus 100.

In some implementations, referring to FIG. 11, the operation surface 80a is oriented toward a second direction. In this way, the interaction convenience can be further improved, especially the interaction convenience for non-wearers can be further improved.

In some implementations, referring to FIG. 11, the interaction assembly 80 includes a touchpad 81, and the operation surface 80a is a touch surface of the touchpad 81. In this way, on one hand, it helps to improve the convenience of interaction, and on the other hand, it also helps to improve the aesthetic appearance of the head-mounted display apparatus 100.

It should be noted that the arrangement manner of the interaction assembly 80 is not limited to this. For example, in some other implementations, the interaction assembly 80 includes a touch sensing structure disposed on the second display assembly 70, so that at least a partial area of the second window 70a of the second display assembly 70 forms the operation surface 80a. In some other implementations, the interaction assembly 80 includes an interaction surface and interaction keys, interaction knobs, interaction levers, etc., disposed on the interaction surface.

In some implementations, referring to FIG. 11, the interaction assembly 80 includes a touchpad 81 and a touch adapter 82 (e.g., FPC). The touch adapter 82 electrically connects the touchpad 81 to the control assembly 30. The control assembly 30 is configured to obtain the interaction command received by the interaction assembly 80, and control the display state of the first display assembly 20 and/or the second display assembly 70 according to the interaction command.

The specific structural form of the touchpad 81 is not limited. In some implementations, referring to FIG. 11, the touchpad 81 includes a cover plate 811, a touch sensing board 812, and a first adhesive 813 connecting the cover plate 811 and the touch sensing board 812. The cover plate 811 covers a surface of the touch sensing board 812 on one side in the thickness direction. A surface of the cover plate 811 away from the touch sensing board 812 along the thickness direction forms a touch surface. Here, the touch sensing board 812 may be specifically set to realize sensing of touch operations by sensing capacitance, resistance, voltage, pressure, light, etc.

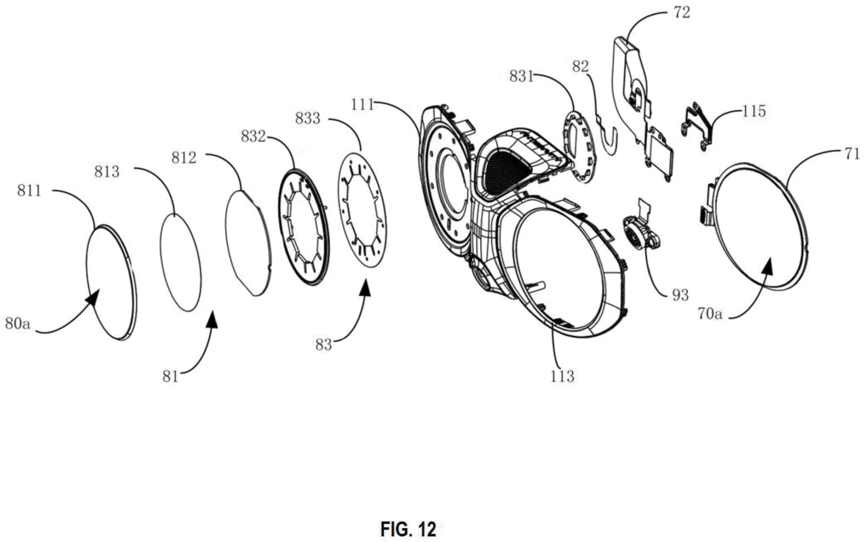

In some implementations, referring to FIG. 12, the interaction assembly 80 further includes an indicator device 83. The indicator device 83 is configured to indicate a current display state of the first display assembly 20 and/or the second display assembly 70. In this way, the operation convenience of the head-mounted display apparatus 100 is improved.

Exemplarily, referring to FIG. 12, the indicator device 83 includes an indicator light. The indicator light includes a light board 831, a light guide plate 832, and a second adhesive 833 connecting the light board 831 and the light guide plate 832. The light guide plate 832 is set as a light-transmitting structure, and the light guide plate 832 is exposed on at least one outer surface of the housing 10. In this way, on one hand, it helps to improve the operation convenience for non-wearers, and on the other hand, it helps to improve the aesthetic appearance of the head-mounted display apparatus 100.

In some implementations, referring to FIG. 12, the indicator light extends along an outer periphery of the touchpad 81 to form an annular closed structure. In this way, the aesthetic appearance is further improved.

In some implementations, referring to FIG. 12, the housing 10 has two view zones 10b distributed along a width direction of the head-mounted display apparatus 100. The second display assembly 70 is disposed in one of the view zones 10b, and the interaction assembly 80 is disposed in the other view zone 10b.

Exemplarily, the housing 10 includes a front shell 11. The front shell 11 includes a third frame body 111 and a fourth frame body 113. The third frame body 111 and the fourth frame body 113 are respectively disposed in the two view zones 10b. The interaction assembly 80 is fixed to one of the third frame body 111 or the fourth frame body 113, and the second display assembly 70 is fixed to the other of the third frame body 111 or the fourth frame body 113.

Further exemplarily, the front shell 11 includes a locking member. The locking member is configured to lock the interaction assembly 80 and the second display assembly 70 to the third frame body 111 and the fourth frame body 113 respectively. The specific structural form of the locking member is not limited, as long as it can realize locking of the interaction assembly 80 and the display assembly.

In some implementations, it helps to expand the area of the operation surface 80a of the interaction assembly 80, facilitating operation by the wearer and non-wearer, and helps to improve the aesthetic appearance of the head-mounted display apparatus 100.

In some implementations, referring to FIGS. 1 and 10, the head-mounted display apparatus 100 includes an antenna 90. The antenna 90 is at least configured to receive image transmission data sent by a mobile platform. The first display assembly 20 is at least configured to display the image transmission data. Here, the specific structural form of the antenna 90 is not limited. The number of antennas 90 may be one or more.

In some implementations, at least one antenna 90 is further configured to send data information to the mobile platform and/or receive data information sent by the mobile platform. At least one antenna 90 is further configured to receive data information from other control terminals. Exemplarily, at least one antenna is configured to receive data information from a motion sensing remote controller and/or send data information to the motion sensing remote controller. In some implementations, the aforementioned data information includes at least one of the following information: control commands, attitude information, status information, image data, flight logs, etc. Exemplarily, the aforementioned control commands include but are not limited to commands for controlling the movement of the mobile platform, commands for controlling the movement of an imaging device mounted on the mobile platform (e.g., rotating to change the view), commands for controlling the imaging device mounted on the mobile platform to capture images, etc.

In some implementations, the antenna 90 is electrically connected to the control assembly 30, for example, electrically connected to the control assembly 30 through a coaxial cable. The image transmission data received by the antenna 90 can be transmitted to the control assembly 30, and the control assembly 30 controls the first display assembly 20 to display the image transmission data.

In some implementations, the antenna 90 includes at least one omnidirectional antenna. Here, the omnidirectional antenna specifically refers to a structure that exhibits 360° relatively uniform radiation in a horizontal pattern without obvious directionality.

In some implementations, by providing at least one omnidirectional antenna, continuous communication with the mobile platform during the movement of the mobile platform can be realized.

In some implementations, the antenna 90 includes at least one directional antenna. Here, the directional antenna specifically refers to an antenna with relatively strong ability to transmit and receive signals in one or several specific directions, and relatively weak or even zero ability to transmit and receive signals in other directions.

The number of directional antennas may be one, or may be multiple. In a case where the number of directional antennas is multiple, the radiation directions of the directional antennas may be different or not completely the same.

The radiation direction of the directional antenna specifically refers to the direction indicated by the main lobe in the antenna pattern of the directional antenna. The main lobe specifically refers to a signal lobe whose radiation intensity exceeds a certain set value. The direction indicated by the main lobe specifically refers to the direction indicated by the connecting line between the center point of the antenna pattern and the point with the highest radiation intensity in the main lobe. In some implementations, the antenna pattern of the directional antenna may have two or more main lobes, that is, one directional antenna may have two or more radiation directions. In some implementations, the antenna pattern of the directional antenna has only one main lobe, that is, one directional antenna has only one radiation direction.

In some implementations, by providing at least one directional antenna, signal enhancement in a specific direction can be realized, improving the communication stability between the head-mounted display apparatus 100 and the mobile platform.

In some implementations, at least one antenna 90 is disposed within the electrical cavity 10a. Exemplarily, the antenna 90 includes at least one directional antenna, and the directional antenna is disposed within the electrical cavity 10a.

In some implementations, the head-mounted display apparatus 100 includes an antenna housing connected to the housing 10, and at least one antenna 90 is disposed within the antenna housing. Exemplarily, the antenna 90 includes at least one omnidirectional antenna, and the omnidirectional antenna is disposed within the antenna housing. In such implementations, the omnidirectional antenna is set as an external antenna. In this way, it helps to reduce signal shielding of the omnidirectional antenna, thereby improving the signal radiation intensity of the omnidirectional antenna.

Further, in some implementations, the antenna housing is rotatably connected to the housing 10, so that the omnidirectional antenna has an unfolded position and a folded position (in the implementation shown in FIG. 1, the omnidirectional antenna is in the unfolded position), facilitating storage.

In some implementations, referring to FIG. 7, the omnidirectional antenna (in the unfolded position) is inclined toward the second direction relative to a reference plane. In other words, the omnidirectional antenna is inclined toward the rear. It can be understood that in most usage scenarios, the front side of the head-mounted display apparatus 100 faces the mobile platform and/or other target objects. Therefore, in some implementations of the present disclosure, the omnidirectional antenna is inclined toward the rear. In this way, it helps to further reduce shielding and improve the intensity when radiating signals to the mobile platform on the front side.

In some implementations, referring to FIG. 1, the antenna 90 includes a first omnidirectional antenna 90a and a second omnidirectional antenna 90b. The first omnidirectional antenna 90a and the second omnidirectional antenna 90b are distributed along the width direction of the head-mounted display apparatus 100.

As an example, the first omnidirectional antenna 90a and the second omnidirectional antenna 90b may be disposed on the top side of the housing 10. In a projection along the first direction, along a direction away from the body housing 10, the first omnidirectional antenna 90a and the second omnidirectional antenna 90b extend obliquely in directions away from each other (in the unfolded position), that is, the first omnidirectional antenna 90a and the second omnidirectional antenna 90b are distributed substantially in a horn shape.

In some implementations, by providing two omnidirectional antennas distributed along the width direction of the head-mounted display apparatus 100, it helps to further improve signal intensity, and this arrangement manner helps to improve aesthetics.

In some implementations, the antenna 90 includes at least one directional antenna. A radiation direction of the at least one directional antenna is parallel to a first reference plane, and/or a radiation direction of the at least one directional antenna is inclined toward a second direction relative to the first reference plane, and/or a radiation direction of the at least one directional antenna is toward the second direction. The first reference plane is perpendicular to the first direction.

Those skilled in the art should understand that all three radiation directions above can improve the signal coverage of the head-mounted display apparatus 100 on the side, rear-side, and rear to a certain extent (since the directional antenna can provide good radiation intensity within a certain angular range adjacent to the radiation direction, even if the radiation direction is toward the direct side or direct rear, the signal coverage on the rear-side can be improved to a certain extent).

In the present disclosure, it is proposed that during actual use, the wearer may turn their head, causing the side, rear-side, or rear of the head-mounted display apparatus 100 to face the mobile platform, or the mobile platform may move to the side, rear-side, or rear of the wearer. For example, in some implementations, the mobile platform is configured to be able to capture a panoramic image (e.g., configured as a panoramic unmanned aerial vehicle/UAV). The head-mounted display apparatus 100 can display an image of a certain view in the panoramic image, and the user can adjust the view currently displayed by the head-mounted display by turning their head. In such implementations, scenarios where the side, rear-side, or rear of the head-mounted display apparatus 100 faces the mobile platform may occur frequently.

The head-mounted display apparatus 100 provided in related technologies usually only has good signal coverage in the front. In the above usage scenarios where the side, rear-side, or rear faces the mobile platform, the head-mounted display apparatus 100 may experience image stuttering due to poor signal, affecting user experience.

In the head-mounted display apparatus 100 of some implementations of the present disclosure, directional antennas with radiation directions toward the side and/or rear-side and/or rear are provided, thereby improving the signal coverage of the head-mounted display apparatus 100 on the side, rear-side, and rear, so that the head-mounted display apparatus 100 can still receive downlink data relatively stably when used with the side, rear-side, or rear facing the mobile platform, improving the user's usage experience.

In some implementations, referring to FIG. 10, the antenna 90 includes a first directional antenna 90c and a second directional antenna 90d with intersecting radiation directions. The radiation directions of the first directional antenna 90c and the second directional antenna 90d are both inclined toward the second direction relative to the first reference plane, and an angle between the radiation directions of the first directional antenna 90c and the second directional antenna 90d and the first reference plane is the same.

In some implementations, the radiation directions of the first directional antenna 90c and the second directional antenna 90d will respectively face the rear-left and rear-right. Moreover, the angles between the radiation directions of the first directional antenna 90c and the second directional antenna 90d and the reference plane are the same, that is, the first directional antenna 90c and the second directional antenna 90d are symmetrically arranged relative to the front-rear direction of the head-mounted display apparatus 100. In this way, it will help to further improve the omnidirectionality of the signal, so that relatively stable signal transmission can be maintained when any side of the head-mounted display apparatus 100 faces the mobile platform.

In some implementations, the antenna 90 includes a first directional antenna 90c and a second directional antenna 90d. The radiation directions of the first directional antenna 90c and the second directional antenna 90d are both inclined toward the second direction relative to the first reference plane. The first directional antenna 90c and the second directional antenna 90d are respectively disposed at opposite ends of the housing 10 along the width direction.

In some implementations, the first directional antenna 90c and the second directional antenna 90d are respectively disposed at opposite ends of the housing 10 along the width direction. In this way, it helps to reduce shielding in the radiation directions of the first directional antenna 90c and the second directional antenna 90d, thereby helping to improve the signal intensity of both.

In some implementations, referring to FIG. 5, the head-mounted display apparatus 100 includes two sound devices 91 disposed on opposite sides of the first display assembly 20 along the width direction. The first directional antenna 90c and the second directional antenna 90d are respectively disposed on sides of the two sound devices 91 away from the first display assembly 20 along the width direction. The sound devices 91 are set to be able to reflect signals of the first directional antenna 90c and the second directional antenna 90d.

In some implementations, using the sound device 91 as a reflector for the first directional antenna 90c and the second directional antenna 90d helps to improve signal intensity and save internal space of the electrical cavity 10a (no need to additionally provide reflector plates for the first directional antenna 90c and the second directional antenna 90d).

In some implementations, a radiation direction of at least one directional antenna is the first direction, and/or a radiation direction of at least one directional antenna is inclined toward the first direction relative to the first reference plane.

In some implementations, a directional antenna 90 radiating toward the direct front or front-side is further added to the head-mounted display apparatus 100. In this way, it helps to further improve the omnidirectionality of the synthesized signal pattern of the head-mounted display apparatus 100.

In some implementations, referring to FIG. 10, the antenna 90 includes a third directional antenna 90e and a fourth directional antenna 90f. The radiation directions of the third directional antenna 90e and the fourth directional antenna 90f are both toward the first direction, and the polarization modes of the third directional antenna 90e and the fourth directional antenna 90f are complementary.

As an example, the third directional antenna 90e and the fourth directional antenna 90f may be disposed at a middle position of the housing 10 along the width direction, for example, disposed between the two view zones 10b.

In some implementations, two directional antennas 90 radiating toward the direct front and having complementary polarization modes are provided. In this way, the limit transmission distance in front of the head-mounted display apparatus 100 can be improved, thereby improving the signal transmission range of the head-mounted display apparatus 100.

In some implementations, referring to FIG. 10, the third directional antenna 90e and the fourth directional antenna 90f are disposed on a side of the cooling fan 40 along the first direction. The cooling fan 40 is configured to reflect signals of the third directional antenna 90e and the fourth directional antenna 90f.

In some implementations, using the cooling fan 40 as a reflector for the third directional antenna 90e and the fourth directional antenna 90f helps to improve signal intensity and save internal space of the electrical cavity 10a (no need to additionally provide reflector plates for the third directional antenna 90e and the fourth directional antenna 90f).

In some implementations, referring to FIG. 12, the third directional antenna 90e and the fourth directional antenna 90f are set as an integral structure. As an example, the third directional antenna 90e and the fourth directional antenna 90f both include a substrate and a radiation circuit body disposed on the substrate. The substrates of the third directional antenna 90e and the fourth directional antenna 90f are formed as an integral structure. In other words, the third directional antenna 90e and the fourth directional antenna 90f share one substrate.

In some implementations, by setting the third directional antenna 90e and the fourth directional antenna 90f as an integral structure, it helps to reduce assembly difficulty, save space and cost, and helps to maintain the stability of the relative positions of the third directional antenna 90e and the fourth directional antenna 90f.

In some implementations, specifically, the third directional antenna 90e is set to +45° polarization, and the fourth directional antenna 90f is set to -45° polarization.

The specific implementation of the above polarization angles can refer to related technologies in the art, which will not be repeated here.

In related technologies, vertical and horizontal methods are usually configured to achieve polarization complementarity of two antennas 90. However, as mentioned above, the radiation directions of the third directional antenna 90e and the fourth directional antenna 90f are toward the first direction. Under this premise, setting the third directional antenna 90e and the fourth directional antenna 90f to ±45° polarization is relatively easy to implement, helping to reduce preparation and production difficulty.

Of course, in some other implementations, the third directional antenna 90e and the fourth directional antenna 90f may also be set to complement each other with horizontal and vertical polarization, or achieve polarization complementarity in any other suitable manner provided in related technologies in the art.

In some implementations, referring to FIGS. 2 and 5, the head-mounted display apparatus 100 further includes a sound device 91 and/or a sound receiving device 92 disposed on the housing 10. In this way, audio capture and/or playback by the head-mounted display apparatus 100 is realized.

In some implementations, referring to FIG. 5, the sound device 91 is disposed within the electrical cavity 10a and connected to the control assembly 30 (e.g., connected to the audio unit 312c of the control assembly 30).

In some implementations, referring to FIG. 5, at least one sound device 91 is disposed on opposite sides of the first display assembly 20 along the width direction of the head-mounted display apparatus 100. In this way, a surround sound effect can be achieved, improving the wearer's auditory experience.

In some implementations, referring to FIG. 5, the sound receiving device 92 is disposed within the electrical cavity 10a and connected to the control assembly 30 (e.g., connected to the audio unit 312c of the control assembly 30).

In some implementations, referring to FIGS. 1 and 12, the head-mounted display apparatus 100 is configured to establish communication connection with a mobile platform to obtain a first image captured by an imaging device mounted on the mobile platform. The head-mounted display apparatus 100 further includes an image sensor 93 disposed on the housing 10. The image sensor 93 is configured to capture a second image. The first display assembly 20 is configured to display the first image and/or the second image.

It can be understood that here, the second image captured by the image sensor 93 disposed on the housing 10 is an environmental image of the environment where the wearer is currently located.

In some implementations, the first display assembly 20 can display one of the first image and the second image, or display the first image and the second image simultaneously. In this way, the wearer can understand the current external environment by observing the second image while wearing the head-mounted display apparatus 100, improving the wearer's usage safety, especially the safety when the wearer moves while wearing the head-mounted display apparatus 100.

In some implementations, specifically, the wearer can send a command to the control assembly 30 (e.g., send an interaction command to the control assembly 30 with the aid of the interaction assembly 80 mentioned above) to switch the screen displayed by the first display assembly 20 between the first image and the second image.

In some implementations, it can be understood that when the first display assembly 20 displays the second image, the wearer may not be able to continue to pay attention to the movement situation of the mobile platform, leading to possible loss of control, collision, etc., of the mobile platform. Therefore, in some implementations, in response to the first display assembly 20 displaying the second image, a safety command can be sent to the mobile platform (e.g., sending a safety command to the mobile platform through the control assembly 30) to control the mobile platform to execute a safety action. Taking the mobile platform as a UAV as an example, the safety action includes but is not limited to a hovering action, a return-to-home action, a landing action. In this way, the probability of the mobile platform losing control or colliding in a case where the wearer fails to observe the image transmission screen in time can be reduced.

In some implementations, the number of image sensors 93 may be one, or may be multiple. In a case where the number of image sensors 93 is multiple, the multiple image sensors 93 may be disposed on different surfaces of the housing 10. In this way, capture of environmental images in different directions is realized, and even capture of a panoramic image of the external environment is realized.

In some implementations, at least one image sensor 93 is exposed on a side surface of the housing 10 along the first direction. In this way, the second image can at least include an environmental image of the front view, facilitating the wearer to move forward while wearing the head-mounted display apparatus 100.

In some implementations, at least one image sensor 93 is further configured to capture a control command of a control device associated with the head-mounted display apparatus 100.

Here, the control device associated with the head-mounted display apparatus 100 includes but is not limited to a handle, a remote controller, etc. The control command of the control device may be configured to control the head-mounted display apparatus 100, and/or the control command of the control device is configured to control a mobile platform communicatively connected to the head-mounted display apparatus 100. Exemplarily, the head-mounted display apparatus 100 may forward the captured control command to the mobile platform (e.g., forward to the mobile platform through the antenna 90).

The specific implementation of the image sensor 93 capturing the control command is not limited. Exemplarily, the control command of the control device includes a movement trajectory of the control device, and the image sensor 93 is set to be able to capture the movement trajectory. As another example, the control command of the control device includes a control pattern displayed by the control device, and the image sensor 93 is set to be able to capture the control pattern. As yet another example, the control command of the control device includes a light signal sent by the control device (e.g., infrared signal, laser signal, etc.), and the image sensor 93 is set to be able to capture the signal.

In some implementations, the image sensor 93 can also be configured to capture preset gesture information or preset image information as a control command. Different from the control command of the control device described above, the gesture information can be issued by the user through their own hand, and the preset image information can be issued by other external devices (the external device does not have to be associated with the head-mounted display apparatus). In this way, diversified control of the head-mounted display apparatus and/or the mobile platform is realized. In some implementations, the head-mounted display apparatus 100 can also obtain the user's voice command as a control command.

In some implementations, referring to FIGS. 3 and 4, the head-mounted display apparatus 100 includes a human body detection sensor 94 disposed on the housing 10. The human body detection sensor 94 is exposed on a side surface of the housing 10 along a second direction. The second direction is opposite to the first direction.

Here, the human body detection sensor 94 is configured to detect whether the head-mounted display apparatus 100 is worn by a wearer. Exemplarily, the head-mounted display apparatus 100 can determine whether the head-mounted display apparatus 100 is worn based on the detection result of the human body detection sensor 94, and then automatically switch the usage mode of the head-mounted display apparatus 100, for example, automatically power on/off, automatically switch the display mode of the first display assembly 20 and/or the second display assembly 70, etc.

The specific structural form of the human body detection sensor 94 is not limited. As an example, referring to the figure, the human body detection sensor 94 includes a distance sensor 941 and a distance sensing adapter 942 (e.g., FPC). The distance sensing adapter 942 electrically connects the distance sensor 941 to the control assembly 30. The distance sensor can detect the distance between the head-mounted display apparatus 100 and the wearer. The control assembly 30 can determine whether the head-mounted display apparatus 100 is currently worn according to the detection result of the distance sensor.

### Second Implementation

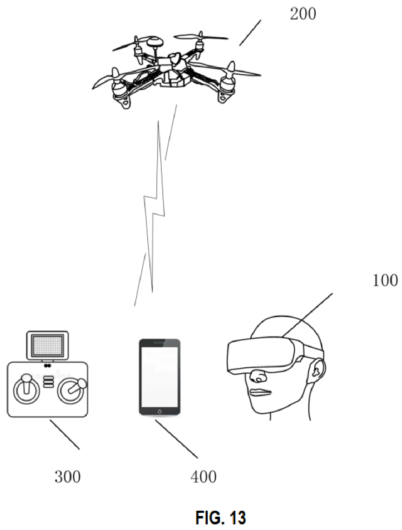

A second implementation of the present disclosure provides a mobile platform system. Referring to FIG. 13, it includes the head-mounted display apparatus 100 of the first implementation of the present disclosure, and a mobile platform 200. The mobile platform 200 is equipped with an imaging device 201. An image captured by the imaging device 201 can be transmitted to the first display assembly for display.

In some implementations, referring to FIG. 13, the mobile platform system includes a remote control device 300. The remote control device 300 is communicatively connected to the head-mounted display apparatus 100 and/or the mobile platform 200, to send signals (e.g., control signals) to the head-mounted display apparatus 100 and/or the mobile platform 200, and/or receive signals (e.g., image signals) sent by the head-mounted display apparatus 100 and/or the mobile platform 200.

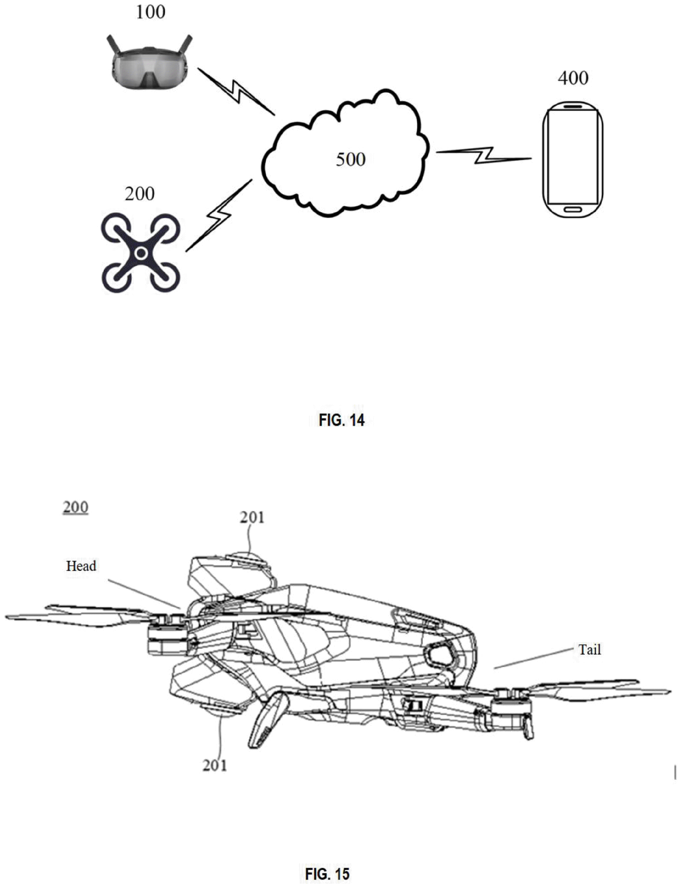

In some implementations, referring to FIGS. 13 and 14, the mobile platform 200 and/or the head-mounted display apparatus 100 are configured to be able to establish communication connection with a terminal device 400. Here, the terminal device includes but is not limited to a mobile phone, a laptop computer, a tablet computer. Exemplarily, the mobile platform 200 and/or the head-mounted display apparatus 100 can send signals (e.g., image data) to the terminal device 400, and/or receive signals (e.g., control signals) sent by the terminal device 400.

In some implementations, referring to FIG. 14, the communication connection between the mobile platform 200 and/or the head-mounted display apparatus 100 and the terminal device 400 can be realized based on a cloud server 500.

In some implementations, the mobile platform 200 includes but is not limited to an aircraft, a vehicle, a vessel, a mobile robot, or a handheld stabilizer.

In some implementations, referring to FIG. 15, the mobile platform 200 is equipped with multiple imaging devices 201, and the multiple imaging devices 201 are configured to capture a panoramic image. The panoramic image includes a horizontal panoramic view (horizontal 360°, vertical view restricted), a cylindrical projection panoramic image (cylindrical unfolding), a partial spherical panoramic image (covering horizontal 360° and a certain range of field of view in the vertical dimension), and a complete spherical panoramic image (horizontal 360° × vertical 180° complete spherical coverage).

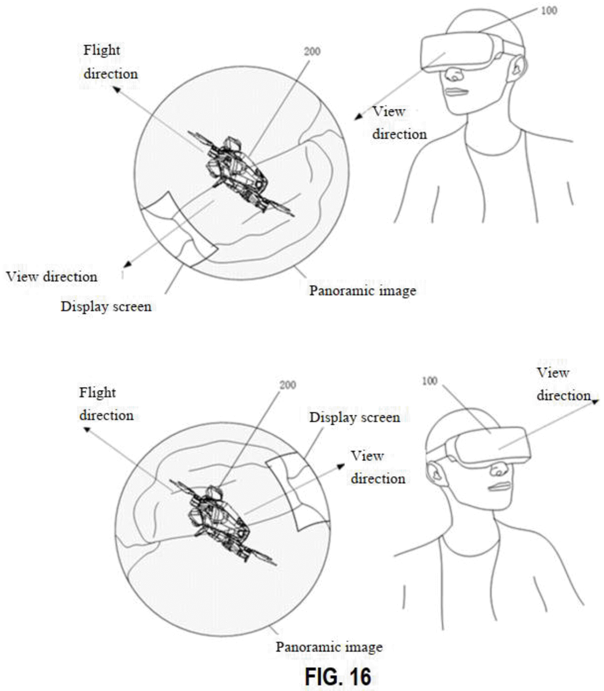

In some implementations, referring to FIG. 16, the mobile platform 200 captures a spherical panoramic image through the multiple imaging devices mounted thereon. The spherical panoramic image can cover 360° in the horizontal plane and at least 180° degrees in the vertical plane without blind spots. The screen displayed by the first display assembly 20 and/or the second display assembly 70 in some implementations may be a screen obtained based on a certain view of the panoramic image (e.g., the display screen shown in FIG. 16). In some implementations, the screen displayed by the first display assembly 20 and/or the second display assembly 70 may be determined based on a virtual camera orientation. In some implementations, the head pose data when the user wears the head-mounted display apparatus can be mapped to the control of the target view of the virtual camera, so that the view switches synchronously when the user's head turns to look around the panoramic screen. In some implementations, the user can also adjust the virtual camera orientation through a touch terminal (such as sliding/key operation of a mobile phone/remote controller) or by manipulating a mobile platform control device (e.g., roller adjusting pitch angle), realizing screen observation in a non-immersive environment. In some implementations, the system can dynamically control the virtual camera orientation based on the spatial relationship between the mobile platform and the target subject, thereby reducing the frequency of manual operation by the user. For example, automatically focusing on the subject view when the mobile platform tracks a person. As another example, automatically focusing on a point of interest when the mobile platform flies according to a preset trajectory. In some implementations, the system can control the virtual camera orientation based on the flight trajectory of the mobile platform, for example, automatically focusing on the ground direction view when the mobile platform lands.

In some implementations, referring to FIG. 16, taking a panoramic UAV as an example, in response to a user's view adjustment operation, direction information of a virtual camera is obtained, and a first screen is displayed based on the direction information. The first screen refers to a screen corresponding to the virtual camera. Where, the view direction corresponding to the first screen is independent of a UAV reference direction (in some implementations, the UAV flight direction). That is to say, the user view is decoupled from the UAV flight direction, and the two are independently controlled. The flight path is not affected when the user turns their head to adjust the view, and conversely, the user view will not be forced to shift synchronously when the flight turns. In some implementations, the aforementioned UAV reference direction further includes at least one of the following directions: a head direction of the UAV, a tail direction of the UAV, a ground direction at a -90° angle to the head direction on the pitch axis, a sky direction at a +90° angle to the flight direction on the pitch axis, a port direction at a -90° angle to the head direction on the yaw axis, a starboard direction at a +90° angle to the head direction on the yaw axis.

It should be noted that the relevant descriptions of the mobile platform system and the mobile platform in some implementations are applicable to any implementation of the present disclosure.

### Third Implementation

A third implementation of the present disclosure provides a head-mounted display apparatus. Referring to FIGS. 1-12, the head-mounted display apparatus includes a device body, a first display assembly 20, a second display assembly 70, and an interaction assembly 80.

The device body includes a plurality of outer surfaces and an inner surface facing a face of a wearer. The first display assembly 20 has a first window 20a exposed on the inner surface. The first display assembly 20 is configured to display an image. The second display assembly 70 has a second window 70a exposed on at least one outer surface. The second display assembly 70 is configured to display an image. The interaction assembly 80 is configured to receive an interaction command. The interaction command is configured to control a display state of the first display assembly 20 and/or the second display assembly 70.

Exemplarily, the device body includes the housing 10 described in the first implementation of the present disclosure. As another example, the device body includes the housing 10 and the face shield 50 described in the first implementation of the present disclosure.

In the head-mounted display apparatus of some implementations of the present disclosure, the first display assembly 20 observable by the wearer and the second display assembly 70 observable by a non-wearer are provided, and the display state of the first display assembly 20 and/or the second display assembly 70 can be controlled through the interaction assembly 80. In this way, the usage scenarios of the head-mounted display apparatus can be expanded, improving the playability of the head-mounted display apparatus.

In some implementations, an orientation of the second window 70a is opposite to an orientation of the first window 20a. Exemplarily, the first window 20a is disposed toward the second direction mentioned above, and the second window 70a is disposed toward the first direction mentioned above.

In some implementations, by setting the orientation of the second window 70a to be opposite to the orientation of the first window 20a, it helps to increase the display area of the second window 70a, and makes the second window 70a easier to be observed by a non-wearer.

In some implementations, the interaction assembly 80 has an operation surface 80a exposed on at least one outer surface. In some implementations, the interaction assembly 80 realizes interaction with the aid of the operation surface 80a. The operation surface 80a is exposed on at least one outer surface of the housing 10. In this way, both the wearer and the non-wearer can interact with the interaction assembly 80 relatively conveniently, further expanding the usage scenarios of the head-mounted display apparatus and improving the playability of the head-mounted display apparatus.

In some implementations, the interaction assembly 80 includes a touchpad 81, and the operation surface 80a is a touch surface of the touchpad 81. In this way, on one hand, it helps to improve the convenience of interaction, and on the other hand, it also helps to improve the aesthetic appearance of the head-mounted display apparatus.

In some implementations, an orientation of the operation surface 80a is opposite to the orientation of the first window 20a. Exemplarily, the first window 20a is disposed toward the second direction, and the operation surface 80a is disposed toward the first direction. In this way, the interaction convenience can be further improved, especially the interaction convenience for non-wearers can be further improved.

In some implementations, the head-mounted display apparatus includes a control assembly 30. The first display assembly 20, the control assembly 30, and the second display assembly 70 are sequentially arranged along the first direction. The control assembly 30 is located between the first display assembly 20 and the second display assembly 70. In this way, it helps to save the installation space of the second display assembly 70, so that the size of the display interface of the second display assembly 70 can also be increased.

In some implementations, the device body has two view zones 10b distributed along a width direction of the head-mounted display apparatus. The second display assembly 70 is disposed in one of the view zones 10b, and the interaction assembly 80 is disposed in the other view zone 10b. In some implementations, it helps to expand the area of the operation surface 80a of the interaction assembly 80, facilitating operation by the wearer and non-wearer, and helps to improve the aesthetic appearance of the head-mounted display apparatus.

The relevant technical details of the device body, the first display assembly 20, the second display assembly 70, and the interaction assembly 80 mentioned above, as well as technical details of other structures in the head-mounted display apparatus, can refer to the relevant descriptions in the first implementation of the present disclosure, which will not be repeated here.

### Fourth Implementation

A fourth implementation of the present disclosure provides a mobile platform system. Referring to FIG. 13, it includes the head-mounted display apparatus provided in the third implementation of the present disclosure, and a mobile platform. The mobile platform is equipped with an imaging device. Where, an image captured by the imaging device can be transmitted to the first display assembly and/or the second display assembly for display.

In some implementations, the mobile platform includes but is not limited to an aircraft, a vehicle, a vessel, a mobile robot, or a handheld stabilizer.

In some implementations, the mobile platform is equipped with multiple imaging devices, and the multiple imaging devices are configured to capture a panoramic image.

### Fifth Implementation

A fifth implementation of the present disclosure provides a method for controlling a head-mounted display apparatus. Referring to FIGS. 1-12, the head-mounted display apparatus includes a device body, a first display assembly, a second display assembly, and an interaction assembly. The device body includes a plurality of outer surfaces and an inner surface facing a face of a wearer. The first display assembly has a first window exposed on the inner surface. The second display assembly has a second window exposed on at least one of the outer surfaces.

The head-mounted display apparatus of the fifth implementation of the present disclosure uses a head-mounted display apparatus including a first display assembly, a second display assembly, and an interaction assembly as described in any of the above implementations and as will be described in any of the following implementations.

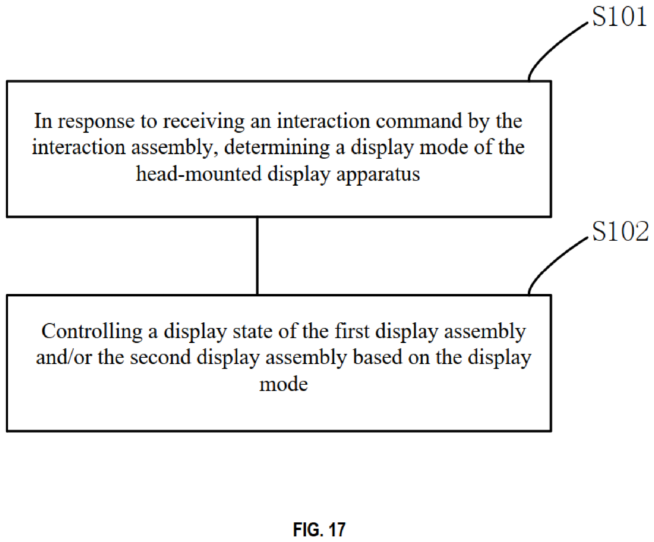

Referring to FIG. 17, the method for controlling a head-mounted display apparatus of some implementations of the present disclosure includes the following operations.

Operation S101: in response to receiving an interaction command by the interaction assembly, determining a display mode of the head-mounted display apparatus.

Operation S102: controlling a display state of the first display assembly and/or the second display assembly based on the display mode.

It can be understood that the method of some implementations of the present disclosure can control the display state of the first display assembly and/or the second display assembly based on the interaction command received by the interaction assembly on the basis of adding a display outer screen (i.e., the second display assembly) to the head-mounted display apparatus, which can enrich the display effect of the head-mounted display apparatus based on human-computer interaction, thereby improving user experience.

Exemplarily, the interaction assembly includes a touchpad, and the interaction command received by the interaction assembly includes an operation performed on the touchpad.

The operation performed on the touchpad can be completed by the wearer of the head-mounted display apparatus, or can be completed by a non-wearer.

The operation methods when performing operations on the touchpad include but are not limited to sliding operations on the touch surface of the touchpad, tap operations on specific areas of the touchpad, press operations on specific areas of the touchpad, etc.

Exemplarily, determining a display mode of the head-mounted display apparatus in response to receiving an interaction command by the interaction assembly includes: in response to a display mode switching operation on the touchpad, determining the head-mounted display apparatus mode.

The first display assembly and/or the second display assembly may have multiple different display states.

Exemplarily, both the first display assembly and the second display assembly have a screen-off state and an image display state. Here, the image display state generally refers to a state of displaying any image. In other words, any state other than the screen-off state can be considered as an image display state.

Exemplarily, the head-mounted display apparatus is configured to be able to establish a communication connection with a mobile platform. The image display states of both the first display assembly and the second display assembly include an image transmission display state. The image transmission display state specifically refers to a state of displaying image transmission data obtained through communication with the mobile platform. Exemplarily, the image transmission data includes a panoramic image.

Exemplarily, the head-mounted display apparatus has at least one image sensor. The image sensor is at least configured to capture an environmental image. The image display state of the first display assembly includes an environment display state. In the environment display state, the first display assembly at least displays the environmental image captured by the image sensor (e.g., may only display the environmental image, or may simultaneously display the environmental image and the image obtained by the mobile platform).

Exemplarily, the image display state of the second display assembly includes at least one of a wallpaper display state, a parameter display state, or a query display state.

Exemplarily, in the wallpaper display state, the second display assembly displays a preconfigured picture, animated picture, live photo, or video. In this way, personalized appearance display of the head-mounted display apparatus in a worn state and/or non-worn state is realized.

Exemplarily, in the parameter display state, the second display assembly displays at least one of power, communication status, location, actuator status, or environmental information of the head-mounted display apparatus and/or an associated external device.

Here, when the head-mounted display apparatus controls the second display assembly to be in the parameter display state, it can control the second display assembly to display at least one of power, communication status, location, actuator status, or environmental information of the head-mounted display apparatus and/or an associated external device. In this way, personalized parameter display of the head-mounted display apparatus based on the outer screen can be realized. Where, the associated external device may include but is not limited to: a control terminal, a remote controller, a controlled terminal (e.g., an unmanned aerial vehicle), etc. The power is configured to indicate the power status of the energy storage device on the apparatus. The communication status is configured to indicate whether the communication interface of the apparatus is normal. The location is configured to indicate the current location of the apparatus. The actuator status is configured to indicate the current status of the actuator on the apparatus. The environmental information is configured to indicate attribute information corresponding to the external environment, for example, the flight limit height of the current environment. In this way, it is convenient for the user to quickly obtain relevant parameter information without being limited to the condition that the user wears the head-mounted display apparatus, improving user experience. For example, quickly viewing parameter information of the aircraft, flight goggles, remote controller, etc.

Exemplarily, in the query display state, the second display assembly displays stored historical image data. Here, a non-wearing user can control the second display assembly to display the historical image data stored in the head-mounted display apparatus based on human-computer interaction operations, for example, quickly viewing historical captured screens or captured videos, etc., thereby enriching the viewing experience in non-wearing scenarios.

In some implementations, the display mode includes a first display mode, and controlling the display state of the first display assembly and/or the second display assembly based on the display mode includes: in the first display mode, controlling both the first display assembly and the second display assembly to be in an image display state.

In the first display mode, both the first display assembly and the second display assembly display images, so that both the wearer and the non-wearer can obtain visual experience simultaneously, improving the playability of the head-mounted display apparatus.

In some implementations, the head-mounted display apparatus is configured to be able to establish a communication connection with a mobile platform. In the first display mode, controlling both the first display assembly and the second display assembly to be in the image display state includes: controlling both the first display assembly and the second display assembly to be in an image transmission display state, to display image transmission data obtained through communication with the mobile platform.

Here, both the first display assembly and the second display assembly display image transmission data, so that both the wearer and the non-wearer can observe the image transmission data captured by the imaging device of the mobile platform. In this way, both the wearer and the non-wearer can experience the fun of flying.

In some implementations, controlling both the first display assembly and the second display assembly to be in the image transmission display state includes: controlling the first display assembly to display a first image transmission screen, and controlling the second display assembly to display a second image transmission screen, where the first image transmission screen and the second image transmission screen are screens obtained by different processing of the image transmission data.

Exemplarily, the first image transmission screen and the second image transmission screen may be screens obtained by different rendering of the image transmission data.

As another example, the first image transmission screen and the second image transmission screen may be screens obtained by different cropping of the image transmission data (e.g., cropping using different sizes, selecting different positions for cropping).

It can be understood that there are differences in the display effects of the first display assembly and the second display assembly, and there are also differences in the viewing needs of the wearer and the non-wearer. In some implementations, making the first display assembly and the second display assembly display different image transmission screens can enable both the wearer and the non-wearer to obtain a better viewing experience.

Of course, in some implementations, controlling both the first display assembly and the second display assembly to be in the image transmission display state may include controlling the first display assembly and the second display assembly to display the same image transmission screen.

In some implementations, the control method further includes switching the processing method of the first image transmission screen and/or the second image transmission screen in response to the interaction command received by the interaction assembly. In this way, the wearer and/or non-wearer can adjust the first image transmission screen and/or the second image transmission screen to a desired screen through human-computer interaction.

In some implementations, the image transmission data includes a panoramic image. The first image transmission screen includes a screen of a first view obtained from the panoramic image, and the second image transmission screen includes a screen of a second view obtained from the panoramic image. In this way, different viewing needs of the wearer and the non-wearer are met.

In some implementations, the control method further includes adjusting the first view and/or the second view in response to the interaction command received by the interaction assembly. In this way, the wearer and/or non-wearer are allowed to adjust the view of the first image transmission screen and/or the second image transmission screen to a desired view through human-computer interaction, meeting different viewing needs.

In some implementations, the interaction assembly includes a touchpad. Adjusting the first view and/or the second view in response to the interaction command received by the interaction assembly includes: in response to a view adjustment operation on the touchpad, adjusting the second view. In this way, the wearer and/or non-wearer are allowed to realize the adjustment of the view of the second display assembly by operating the touchpad, improving operation convenience.

Exemplarily, the view adjustment operation on the touchpad includes a sliding operation on the touchpad. Adjusting the second view in response to the view adjustment operation on the touchpad includes: obtaining a sliding direction of the sliding operation on the touchpad, determining an adjustment direction of the second view according to the sliding direction, and/or obtaining a sliding distance of the sliding operation on the touchpad, determining an adjustment amount of the second view according to the sliding distance. In this way, the wearer and/or non-wearer can realize relatively precise adjustment of the second view through simple sliding operations, reducing adjustment difficulty and improving adjustment efficiency.

In the above implementation, the first view can be adjusted in real time according to the wearer's head rotation angle. Of course, in some implementations, the control method further includes adjusting the first view in response to a view adjustment operation on the touchpad.

In some implementations, adjusting the first view and/or the second view in response to the interaction command includes: in response to receiving the interaction command by the interaction assembly, adjusting the first view to a current view watched by a wearer wearing the head-mounted display apparatus, and adjusting the second view to a view in a reference direction of the mobile platform. The reference direction includes at least one of the following directions of the mobile platform: a movement direction of the mobile platform, a head direction of the mobile platform, a tail direction of the mobile platform, a port direction of the mobile platform, a starboard direction of the mobile platform, a ground direction pointing to the ground relative to the mobile platform, or a sky direction pointing to the sky relative to the mobile platform.

Taking the mobile platform as an unmanned aerial vehicle as an example.

The movement direction of the mobile platform may refer to the current traveling direction of the mobile platform.

The head direction of the mobile platform may refer to a direction pointing to the head along the roll axis of the mobile platform.

The tail direction of the mobile platform may refer to a direction pointing to the tail along the roll axis of the mobile platform.

The port direction of the mobile platform may refer to a direction at a -90° angle to the head direction on the yaw axis.

The starboard direction of the mobile platform may refer to a direction at a +90° angle to the head direction on the yaw axis.

The ground direction pointing to the ground relative to the unmanned aerial vehicle may refer to a direction at a -90° angle to the head direction on the pitch axis; or, the ground direction may refer to a direction consistent with the direction of gravitational acceleration.

The sky direction pointing to the sky relative to the mobile platform refers to a sky direction at a +90° angle to the flight direction on the pitch axis; or, the sky direction may refer to a direction opposite to the direction of gravitational acceleration.

The screens in the above reference directions help the non-wearer to observe the current control situation of the mobile platform. In this way, the wearer (i.e., the pilot) can watch the screen captured by the aircraft in real time based on the first display assembly. At the same time, a coach or instructor (i.e., non-wearer) can provide real-time guidance on the pilot's operation based on the screens in the above reference directions, which is beneficial for improving the safety of the pilot's operation and obtaining professional operation guidance suggestions, etc.

In some implementations, adjusting the first view and/or the second view in response to receiving the interaction command by the interaction assembly includes: in response to receiving the interaction command by the interaction assembly, adjusting the second view from a current view to a view in another reference direction. In this way, it is convenient for the coach or instructor to switch screens of different reference directions to guide the pilot's operation.

In some implementations, controlling the second display assembly to be in the image display state includes: controlling the second display assembly to be in one of the following display states: a wallpaper display state, a parameter display state, a query display state, or an image transmission display state.

The specific display methods and advantages of the above several display states refer to the descriptions in the relevant parts above, and will not be repeated here.

In some implementations, the interaction assembly includes a touchpad. Controlling the second display assembly to be in the image display state includes: in response to a screen switching operation on the touchpad, controlling the second display assembly to switch from the image transmission display mode to at least one of the following states: the wallpaper display state, the parameter display state, or the query display state. In this way, the wearer and/or non-wearer can quickly switch different display states of the second display assembly through touch operations on the touchpad.

In some implementations, controlling the first display assembly to be in the image display state includes: in response to receiving the interaction command by the interaction assembly, causing the first display assembly to switch between the image transmission display state and the environment display state. In this way, the wearer can call the environmental screen based on human-computer interaction, facilitating the wearer to move while wearing the head-mounted display apparatus.

It can be understood that when the first display assembly is in the environment display state, the wearer may not be able to continue to pay attention to the movement situation of the mobile platform, leading to possible loss of control, collision, etc., of the mobile platform. Therefore, in some implementations, the control method further includes: in response to the first display assembly switching from the image transmission display state to the environment display state, sending a safety command to the mobile platform to cause the mobile platform to execute a safety action. Here, taking the mobile platform as an unmanned aerial vehicle as an example, the safety action includes but is not limited to a hovering action, a return-to-home action, a landing action. In this way, the probability of the mobile platform losing control or colliding in a case where the wearer fails to observe the image transmission screen in time can be reduced.

In some implementations, the display mode includes a second display mode, and controlling the display state of the first display assembly and/or the second display assembly based on the display mode includes: in the second display mode, controlling the first display assembly to be in a screen-off state, and controlling the second display assembly to be in the image display state. In this way, in a case where the head-mounted display apparatus is not worn, the user can cause the second display assembly to display a screen based on human-computer interaction, thereby realizing functions such as parameter query, viewing historical screens, wallpaper display, etc.

The specific control method for controlling the second display assembly to be in the image display state in the second display mode can refer to the first display mode, and will not be repeated here.

In some implementations, the display mode includes a third display mode, and controlling the display state of the first display assembly and/or the second display assembly based on the display mode includes: in the third display mode, controlling the first display assembly to be in the image display state, and controlling the second display assembly to be in the screen-off state. In this way, the wearer can turn off the screen of the second display assembly based on human-computer interaction when wearing the head-mounted display apparatus to save power. The specific control method for controlling the first display assembly to be in the image display state in the third display mode can refer to the first display mode, and will not be repeated here.

### Sixth Implementation

A sixth implementation of the present disclosure provides a head-mounted display apparatus. On the basis of the fourth implementation of the present disclosure, the head-mounted display apparatus further includes a processor and a memory for storing a computer program executable on the processor. Where, the processor, when executing the computer program, performs the operations of the control method of any one of the fifth implementations of the present disclosure.

The head-mounted display apparatus of some implementations has all the advantages of the head-mounted display apparatus of the fifth implementation and the control method for the head-mounted display apparatus of the sixth implementation, which will not be repeated here.

### Seventh Implementation

A seventh implementation of the present disclosure provides a computer storage medium, which may specifically be a computer-readable storage medium, for example, including a memory storing a computer program. The computer program can be executed by a processor of the head-mounted display apparatus to complete the steps described in the method in the fifth implementation of the present disclosure. The computer-readable storage medium may be a Read-Only Memory (ROM), a Programmable Read-Only Memory (PROM), an Erasable Programmable Read-Only Memory (EPROM), an Electrically Erasable Programmable Read-Only Memory (EEPROM), a Flash Memory, a magnetic surface memory, an optical disc, or a CD-ROM, etc.

In an exemplary implementation, some implementations of the present disclosure further provide a computer program product, including a computer program. The computer program can be executed by a processor of the head-mounted display apparatus to complete the steps described in the method in the fifth implementation of the present disclosure.

### Eighth Implementation

An eighth implementation of the present disclosure provides a head-mounted display apparatus. Referring to FIGS. 1-12, the head-mounted display apparatus includes a housing 10 and a cooling fan 40. The housing 10 has an electrical cavity 10a and an air inlet 15 and an air outlet 14 communicating with the electrical cavity 10a. The cooling fan 40 is disposed within the electrical cavity 10a and configured to drive airflow from the air inlet 15 to the air outlet 14. Where, an opening direction of the air outlet 14 is toward a first direction, or the opening direction of the air outlet 14 is inclined toward the first direction relative to a first reference plane. The first direction is a direction away from a face of a wearer, and the first reference plane is perpendicular to the first direction.

In the head-mounted display apparatus of some implementations, the airflow flowing out of the air outlet 14 will have a tendency to flow toward the front of the wearer. In this way, the probability of the airflow flowing out of the air outlet 14 flowing to the wearer's face (e.g., forehead) or other body parts can be minimized, improving wearing comfort.

Technical details of other structures in the head-mounted display apparatus can refer to the relevant descriptions in the first implementation of the present disclosure, which will not be repeated here.

### Ninth Implementation

A ninth implementation of the present disclosure provides a head-mounted display apparatus. Referring to FIGS. 1-12, the head-mounted display apparatus includes a housing 10 and a cooling fan 40. The housing 10 has an electrical cavity 10a and an air inlet 15 and an air outlet 14 communicating with the electrical cavity 10a. The cooling fan 40 is disposed within the electrical cavity 10a and configured to drive airflow from the air inlet 15 to the air outlet 14. Where, the housing 10 includes two view zones 10b distributed along a width direction of the head-mounted display apparatus, and the air outlet 14 is located between the two view zones 10b along the width direction.

In some implementations, disposing the air outlet 14 of the housing 10 between the two view zones 10b on one hand helps to reduce the occupation of space of the view zones 10b by the air outlet 14 of the housing 10, saving space for the display assembly of the head-mounted display apparatus, and enabling the arrangement of a larger-sized display assembly under the same size of the housing 10. On the other hand, it helps to improve the aesthetic appearance of the head-mounted display apparatus.

Technical details of other structures in the head-mounted display apparatus can refer to the relevant descriptions in the first implementation of the present disclosure, which will not be repeated here.

### Tenth Implementation

A tenth implementation of the present disclosure provides a head-mounted display apparatus. Referring to FIGS. 1-12, the head-mounted display apparatus includes a housing 10 and a cooling fan 40. The housing 10 has an electrical cavity 10a and an air outlet 14 and a plurality of air inlets 15 communicating with the electrical cavity 10a. The cooling fan 40 is disposed within the electrical cavity 10a and configured to drive airflow from the plurality of air inlets 15 to the air outlet 14. Where, the plurality of air inlets 15 are distributed on opposite sides of the air outlet 14 along a width direction of the head-mounted display apparatus.

In some implementations, an arrangement manner of multiple air inlets 15 and one air outlet 14 is adopted. The multiple air inlets 15 are distributed on opposite sides of the air outlet 14 along the width direction of the head-mounted display apparatus. In this way, on one hand, it helps to improve the aesthetic appearance of the head-mounted display apparatus. On the other hand, it helps the airflow to flow substantially along the width direction in the electrical cavity 10a of the housing 10, increasing the contact area and contact time between the airflow and the components in the electrical cavity 10a, thereby improving the cooling efficiency.

Technical details of other structures in the head-mounted display apparatus can refer to the relevant descriptions in the first implementation of the present disclosure, which will not be repeated here.

### Eleventh Implementation

An eleventh implementation of the present disclosure provides a head-mounted display apparatus. Referring to FIGS. 1-12, on the basis of the eighth implementation, or the ninth implementation, or the tenth implementation of the present disclosure, the air inlet 15 of the head-mounted display apparatus is further set to be inclined toward the first direction relative to the first reference plane. In this way, the probability of the airflow flowing out of the air outlet 14 contacting the wearer's body parts is reduced.

In some implementations, the opening direction of the air outlet 14 is parallel to a second reference plane, and the second reference plane is a plane of the width direction of the head-mounted display apparatus. In some implementations, the opening direction of the air outlet 14 is parallel to the second reference plane, that is, the opening direction of the air outlet 14 is not offset toward the left or right side. In this way, the probability of the airflow flowing out of the air outlet 14 flowing to the wearer's ears can be reduced, and the aesthetic appearance can be improved at the same time.

In some implementations, the opening direction of the air outlet 14 points to a top side of a third reference plane, and the third reference plane is perpendicular to the height direction of the head-mounted display apparatus. That is, the opening direction of the air outlet 14 is front-up. In this way, the probability of the airflow flowing out of the air outlet 14 flowing to the wearer's neck and body parts below can be reduced.

In some implementations, an angle between the opening direction of the air outlet 14 and the first reference plane is greater than or equal to 25° and less than or equal to 65°, such as any value among 25°, 30°, 35°, 40°, 45°, 50°, 55°, 60°, 65° or a value between any two. In some implementations, specifically, the angle between the opening direction of the air outlet 14 and the first reference plane is 37°-38°, such as 37.28°.

By setting the inclination angle within the above range, the aesthetic appearance of the head-mounted display apparatus can be improved while reducing the probability of the airflow flowing out of the air outlet 14 flowing to the wearer's face or other body parts.

In some implementations, the air inlet 15 includes at least one first air inlet 15a, and an opening direction of the first air inlet 15a is toward a width direction of the head-mounted display apparatus.

In some implementations, by providing at least one first air inlet 15a with an opening direction toward the width direction of the head-mounted display apparatus, at least a portion of the airflow can flow along the width direction of the head-mounted display apparatus. In this way, it helps to increase the contact area between the airflow and the components in the electrical cavity 10a and prolong the contact time (the dimension of the head-mounted display apparatus along the width direction is usually significantly larger than the dimensions along the front-rear direction and the height direction), thereby improving the cooling effect.

In some implementations, the air inlet 15 includes at least one second air inlet 15b. An opening direction of the second air inlet 15b is toward a second direction, or the opening direction of the second air inlet 15b is inclined toward the second direction relative to a first reference plane. The second direction is opposite to the first direction, and the first reference plane is perpendicular to the first direction.

In some implementations, the opening direction of the second air inlet 15b is set to be toward the second direction (that is, toward the wearer's face) or inclined toward the second direction relative to the first reference plane. In this way, the airflow flowing into the second air inlet 15b can first come into contact with the wearer's face, thereby reducing the stuffiness when the wearer wears the head-mounted display apparatus, improving the wearing experience.

In some implementations, specifically, the air inlet 15 includes at least one second air inlet 15b, and an opening direction of the second air inlet 15b is inclined toward the second direction relative to the first reference plane.

In some implementations, the opening direction of the second air inlet 15b intersects with a second reference plane, and the second reference plane is perpendicular to the width direction of the head-mounted display apparatus. That is, the second air inlet 15b is inclined toward the rear-left or rear-right. In this way, it helps to increase the air intake volume and reduce direct contact between the airflow and the wearer's face, improving wearing comfort.

In some implementations, the opening direction of the second air inlet 15b is parallel to a third reference plane, and the third reference plane is perpendicular to the height direction of the head-mounted display apparatus. That is, the opening direction of the second air inlet 15b is not offset upward or downward. In this way, it helps to reduce wind resistance and increase air intake volume.

In the description of the present disclosure, the description of reference terms such as "one implementation," "some implementations," "example," "specific example," or "some examples" means that specific features, structures, materials, or characteristics described in conjunction with the implementation or example are included in at least one implementation or example of some implementations of the present disclosure. In the present disclosure, the schematic representation of the above terms does not necessarily refer to the same implementation or example. Moreover, the specific features, structures, materials, or characteristics described may be combined in any suitable manner in any one or more implementations or examples. Furthermore, without contradiction, those skilled in the art may combine different implementations or examples described in the present disclosure and features of different implementations or examples.

The above are only preferred implementations of the present disclosure and are not intended to limit the present disclosure. For those skilled in the art, the present disclosure may have various modifications and changes. Any modification, equivalent replacement, improvement, etc., made within the spirit and principle of the present disclosure shall be included in the protection scope of the present disclosure.

## Claims

1. A head-mounted display apparatus, comprising:
a housing having an electrical cavity;
a first display assembly at least partially disposed within the electrical cavity; and
a control assembly configured to control the first display assembly to display an image, wherein:
the control assembly is disposed within the electrical cavity and at least partially disposed at a side of the first display assembly in a first direction, the first direction being a direction away from a face of a wearer; and/or the first direction being a forward direction of the head-mounted display apparatus.

2. The head-mounted display apparatus according to claim 1, wherein:
the first direction is a thickness direction of the head-mounted display apparatus; and/or
the first display assembly comprises a first window, and the first direction is perpendicular to the first window.

3. The head-mounted display apparatus according to claim 1, wherein the housing has a plurality of outer surfaces and an inner surface facing the face of the wearer, the inner surface enclosing with the plurality of outer surfaces to form the electrical cavity.

4. The head-mounted display apparatus according to claim 1, wherein:
the housing comprises an air outlet communicating with the electrical cavity; and
an opening direction of the air outlet is toward the first direction, or the opening direction of the air outlet is inclined toward the first direction relative to a first reference plane perpendicular to the first direction.

5. The head-mounted display apparatus according to claim 1, wherein:
the housing comprises two view zones distributed along a width direction of the head-mounted display apparatus; and
the housing comprises an air outlet communicating with the electrical cavity, the air outlet being located between the two view zones along the width direction.

6. The head-mounted display apparatus according to claim 1, wherein:
the housing comprises an air inlet communicating with the electrical cavity; and
the air inlet comprises at least one first air inlet, an opening direction of the first air inlet being toward a width direction of the head-mounted display apparatus; and/or
the air inlet comprises at least one second air inlet, and an opening direction of the second air inlet is toward a second direction, or the opening direction of the second air inlet is inclined toward the second direction relative to a first reference plane, the second direction being opposite to the first direction, and the first reference plane being perpendicular to the first direction; and/or
opposite sides of the housing along the width direction of the head-mounted display apparatus.

7. The head-mounted display apparatus according to claim 1, further comprising:
a cooling fan, wherein:
the housing has an air inlet and an air outlet communicating with the electrical cavity;
the cooling fan is configured to drive airflow from the air inlet to the air outlet; and
the first display assembly, the control assembly, and the cooling fan are sequentially arranged along the first direction.

8. The head-mounted display apparatus according to claim 7, wherein the cooling fan comprises a centrifugal fan, an axis of the centrifugal fan is parallel to the first direction, and a direction of a blowing side of the centrifugal fan is perpendicular to the first direction.

9. The head-mounted display apparatus according to claim 7, wherein the housing has two view zones distributed along a width direction of the head-mounted display apparatus, and an axis of the cooling fan is located between the two view zones.

10. The head-mounted display apparatus according to claim 7, wherein:
the control assembly comprises a circuit board and an electrical unit disposed on the circuit board;
the electrical unit comprises at least a first electrical unit;
the first electrical unit is disposed on a side of the circuit board facing the cooling fan; and
the cooling fan is configured to drive airflow to flow through the first electrical unit.

11. The head-mounted display apparatus according to claim 10, comprising a heat conduction body, wherein the heat conduction body is disposed between the first electrical unit and the cooling fan.

12. The head-mounted display apparatus according to claim 11, wherein:
the control assembly comprises a shielding body, the shielding body covering a side of the first electrical unit away from the circuit board; and
the heat conduction body is disposed between the shielding body and the first electrical unit, and/or the heat conduction body is disposed between the shielding body and the cooling fan.

13. The head-mounted display apparatus according to claim 10, comprising a first heat sink, wherein the first heat sink is disposed on a side of the first electrical unit facing the cooling fan, and the first heat sink comprises a first heat dissipation fin connected to the cooling fan.

14. The head-mounted display apparatus according to claim 10, wherein the first electrical unit comprises at least one of the following: a main control unit, a WIFI unit, or a main battery unit.

15. The head-mounted display apparatus according to claim 10, wherein the electrical unit comprises at least a second electrical unit, the second electrical unit is disposed on a side of the circuit board facing the first display assembly, and the cooling fan is configured to drive airflow to flow through the second electrical unit.

16. The head-mounted display apparatus according to claim 15, wherein a gap is formed between the second electrical unit and the first display assembly for airflow to flow.

17. The head-mounted display apparatus according to claim 15, wherein the second electrical unit comprises at least one of the following: a radio frequency unit, a storage unit, a Bluetooth unit, an audio unit, or an auxiliary battery unit, wherein the auxiliary battery unit is configured to power the cooling fan and at least one of the radio frequency unit.

18. The head-mounted display apparatus according to claim 1, wherein:
the housing has an air inlet and an air outlet communicating with the electrical cavity;
the head-mounted display apparatus further comprises a cooling fan;
the first display assembly comprises a bracket and an opto-mechanical module disposed on the bracket, and the bracket forms an air duct;
at least a portion of the opto-mechanical module is disposed within the air duct; and
the cooling fan is configured to drive at least a portion of airflow from the air inlet to the air outlet via the air duct.

19. The head-mounted display apparatus according to claim 18, wherein at least a portion of the control assembly is located within the air duct, or the control assembly is spaced apart from the bracket along the first direction.

20. The head-mounted display apparatus according to claim 18, wherein the air duct extends along a width direction of the head-mounted display apparatus, and at least one end of the bracket along the width direction has an air duct inlet communicating the air duct with the air inlet.

21. The head-mounted display apparatus according to claim 20, wherein:
the bracket has air duct inlets at opposite ends along the width direction;
the first display assembly comprises two opto-mechanical modules distributed along the width direction;
the bracket has an air duct outlet communicating the air duct with the air outlet; and
the air duct outlet is located between the two opto-mechanical modules along the width direction.

22. The head-mounted display apparatus according to claim 18, wherein the opto-mechanical module comprises a display screen and a second heat sink disposed on a side of the display screen along the first direction, the second heat sink comprises a second heat dissipation fin, and the second heat dissipation fin is located within the air duct.

23. The head-mounted display apparatus according to claim 22, comprising a heat conduction body, wherein the heat conduction body is disposed between the display screen and the second heat sink.

24. The head-mounted display apparatus according to claim 11, 12, or 23, wherein the heat conduction body comprises a thermal gel.

25. The head-mounted display apparatus according to claim 6, comprising a face shield disposed on a side of the housing along a second direction, the second direction being opposite to the first direction, wherein the face shield encloses with the housing to form a shield cavity, and at least one air inlet communicates the shield cavity with the electrical cavity.

26. The head-mounted display apparatus according to claim 25, wherein the face shield has at least one vent, and the vent communicates the shield cavity with an external environment.

27. The head-mounted display apparatus according to claim 26, wherein:
the air inlet comprises at least one second air inlet;
the second air inlet communicates the shield cavity with the electrical cavity; and
the vent and the second air inlet are distributed along a width direction of the head-mounted display apparatus.

28. The head-mounted display apparatus according to claim 27, wherein:
the first display assembly comprises two opto-mechanical modules distributed along the width direction, and at least one second air inlet is disposed on opposite sides of the first display assembly along the width direction; and
at least one vent is located between the two opto-mechanical modules along the width direction, and/or in a projection along a height direction of the head-mounted display apparatus, projections of the two opto-mechanical modules respectively overlap with projections of at least one vent.

29. The head-mounted display apparatus according to claim 25, comprising a cooling fan, wherein:
the cooling fan is configured to drive airflow from the shield cavity to the electrical cavity via the air inlet;
the cooling fan has a heat dissipation mode and a defogging mode; and
power of the cooling fan in the defogging mode is greater than power of the cooling fan in the heat dissipation mode.

30. The head-mounted display apparatus according to claim 1, wherein:
the first display assembly comprises an opto-mechanical module;
the head-mounted display apparatus comprises an adjustment assembly; and
the adjustment assembly is configured to adjust an optical parameter of the opto-mechanical module.

31. The head-mounted display apparatus according to claim 30, wherein:
the first display assembly comprises two opto-mechanical modules distributed along a width direction of the head-mounted display apparatus;
each opto-mechanical module comprises a display screen and a lens group disposed opposite to the display screen; and
the adjustment assembly is configured to adjust a spacing of the lens groups of the two opto-mechanical modules along the width direction, and/or the adjustment assembly is configured to adjust diopter of the lens groups of the two opto-mechanical modules.

32. The head-mounted display apparatus according to claim 31, wherein:
the adjustment assembly comprises two adjustment knobs in transmission connection with the lens groups of the two opto-mechanical modules respectively;
the adjustment knobs, when rotated, drive at least one lens in the lens groups to move to change diopter of the lens groups;
the adjustment knobs are in sliding fit with the housing along the width direction; and
the adjustment knobs, when moving relative to the housing along the width direction, drive the lens groups to move along the width direction.

33. The head-mounted display apparatus according to claim 1, further comprising a second display assembly disposed on the housing, wherein the first display assembly, the control assembly, and the second display assembly are sequentially arranged along the first direction, and the control assembly is located between the first display assembly and the second display assembly.

34. The head-mounted display apparatus according to claim 33, wherein the second display assembly has a second window exposed on at least one outer surface of the housing, and the second window is oriented toward the first direction.

35. The head-mounted display apparatus according to claim 33, further comprising an interaction assembly configured to receive an interaction command, wherein the interaction command is configured to control a display state of the first display assembly and/or the second display assembly.

36. The head-mounted display apparatus according to claim 35, wherein the interaction assembly has an operation surface exposed on at least one outer surface of the housing.

37. The head-mounted display apparatus according to claim 36, wherein:
the operation surface is oriented toward a second direction, the second direction being opposite to the first direction; and/or
the interaction assembly comprises a touchpad, and the operation surface is a touch surface of the touchpad.

38. The head-mounted display apparatus according to any of claims 35 to 37, wherein:
the housing has two view zones distributed along a width direction of the head-mounted display apparatus;
the second display assembly is disposed in one of the view zones; and
the interaction assembly is disposed in the other view zone.

39. The head-mounted display apparatus according to claim 1, wherein:
the head-mounted display apparatus comprises an antenna;
the antenna is configured to receive image transmission data sent by a mobile platform; and
the first display assembly is configured to display the image transmission data.

40. The head-mounted display apparatus according to claim 39, wherein:
the antenna is electrically connected to the control assembly; and/or
the antenna comprises at least one omnidirectional antenna; and/or
the antenna comprises at least one directional antenna; and/or
at least one antenna is disposed within the electrical cavity; and/or
the head-mounted display apparatus comprises an antenna housing connected to the housing, and at least one antenna is disposed within the antenna housing.

41. The head-mounted display apparatus according to claim 39, wherein:
the antenna comprises at least one directional antenna;
a radiation direction of the at least one directional antenna is parallel to a first reference plane; and/or
a radiation direction of the at least one directional antenna is inclined toward a second direction relative to the first reference plane; and/or
a radiation direction of the at least one directional antenna is toward the second direction, the second direction being an opposite direction of the first direction, and the first reference plane being perpendicular to the first direction.

42. The head-mounted display apparatus according to claim 41, wherein:
the directional antenna comprises a first directional antenna and a second directional antenna with intersecting radiation directions;
the radiation directions of the first directional antenna and the second directional antenna are both inclined toward the second direction relative to the first reference plane; and
an angle between the radiation directions of the first directional antenna and the second directional antenna and the reference plane is the same; and/or
the first directional antenna and the second directional antenna are respectively disposed at opposite ends of the housing along the width direction of the head-mounted display apparatus.

43. The head-mounted display apparatus according to claim 1, further comprising a sound device and/or a sound receiving device disposed on the housing.

44. The head-mounted display apparatus according to claim 43, wherein the sound device is disposed within the electrical cavity and connected to the control assembly; and/or
at least one sound device is disposed on opposite sides of the first display assembly along the width direction of the head-mounted display apparatus; and/or
the sound receiving device is disposed within the electrical cavity and connected to the control assembly.

45. The head-mounted display apparatus according to claim 1, wherein:
the head-mounted display apparatus is configured to establish communication connection with a mobile platform to obtain a first image captured by an imaging device mounted on the mobile platform, and further comprises an image sensor disposed on the housing; and
the image sensor is configured to capture a second image, and the first display assembly is configured to display the first image and/or the second image.

46. The head-mounted display apparatus according to claim 45, wherein at least one image sensor is exposed on a side surface of the housing along the first direction.

47. The head-mounted display apparatus according to claim 45, wherein at least one image sensor is further configured to capture a control command of a control device associated with the head-mounted display apparatus.

48. The head-mounted display apparatus according to claim 1, comprising:
a human body detection sensor disposed on the housing, wherein the human body detection sensor is exposed on a side surface of the housing along a second direction, the second direction being opposite to the first direction.

49. A mobile platform system, comprising:
the head-mounted display apparatus according to any of claims 1 to 48; and
a mobile platform, wherein the mobile platform is equipped with an imaging device,
wherein an image captured by the imaging device can be transmitted to the first display assembly for display.

50. The mobile platform system according to claim 49, wherein the mobile platform comprises an aircraft, a vehicle, a vessel, a mobile robot, or a handheld stabilizer.

51. The mobile platform system according to claim 49, wherein the mobile platform is equipped with multiple imaging devices, and the multiple imaging devices are configured to capture a panoramic image.

52. A head-mounted display apparatus, comprising:
a device body, comprising a plurality of outer surfaces and an inner surface facing a face of a wearer;
a first display assembly having a first window exposed on the inner surface;
a second display assembly having a second window exposed on at least one of the outer surfaces; and
an interaction assembly configured to receive an interaction command, wherein the interaction command is configured to control a display state of the first display assembly and/or the second display assembly.

53. The head-mounted display apparatus according to claim 52, wherein an orientation of the second window is opposite to an orientation of the first window.

54. The head-mounted display apparatus according to claim 53, wherein the interaction assembly has an operation surface exposed on at least one of the outer surfaces.

55. The head-mounted display apparatus according to claim 54, wherein:
the interaction assembly comprises a touchpad, and the operation surface is a touch surface of the touchpad; and/or
an orientation of the operation surface is opposite to the orientation of the first window.

56. The head-mounted display apparatus according to claim 52, wherein:
the device body has two view zones distributed along a width direction of the head-mounted display apparatus;
the first display assembly comprises two opto-mechanical modules respectively disposed in the two view zones; and
the second display assembly is disposed in one of the view zones, and the interaction assembly is disposed in the other view zone.

57. A mobile platform system, comprising:
the head-mounted display apparatus according to any of claims 52 to 56; and
a mobile platform, wherein the mobile platform is equipped with an imaging device,
wherein an image captured by the imaging device can be transmitted to the first display assembly and/or the second display assembly for display.

58. The mobile platform system according to claim 57, wherein the mobile platform is equipped with multiple imaging devices, and the multiple imaging devices are configured to capture a panoramic image.

59. A method for controlling a head-mounted display apparatus, wherein:
the head-mounted display apparatus comprises a device body, a first display assembly, a second display assembly, and an interaction assembly;
the device body comprises a plurality of outer surfaces and an inner surface facing a face of a wearer, the first display assembly comprising a first window exposed on the inner surface; and
the second display assembly has a second window exposed on at least one of the outer surfaces, the method comprising:
in response to receiving an interaction command by the interaction assembly, determining a display mode of the head-mounted display apparatus; and
controlling a display state of the first display assembly and/or the second display assembly based on the display mode.

60. The method according to claim 59, wherein the display mode comprises a first display mode, and controlling the display state of the first display assembly and/or the second display assembly based on the display mode comprises:
in the first display mode, controlling both the first display assembly and the second display assembly to be in an image display state.

61. The method according to claim 60, wherein the head-mounted display apparatus is configured to establish a communication connection with a mobile platform, and in the first display mode, controlling both the first display assembly and the second display assembly to be in the image display state comprises:
controlling both the first display assembly and the second display assembly to be in an image transmission display state, to display image transmission data obtained through communication with the mobile platform.

62. The method according to claim 61, wherein controlling both the first display assembly and the second display assembly to be in the image transmission display state comprises:
controlling the first display assembly to display a first image transmission screen, and controlling the second display assembly to display a second image transmission screen, wherein the first image transmission screen and the second image transmission screen are screens obtained by different processing of the image transmission data.

63. The method according to claim 62, wherein:
the image transmission data comprises a panoramic image;
the first image transmission screen comprises a screen of a first view obtained from the panoramic image; and
the second image transmission screen comprises a screen of a second view obtained from the panoramic image.

64. The method according to claim 63, further comprising:
in response to receiving the interaction command by the interaction assembly, adjusting the first view and/or the second view.

65. The method according to claim 64, wherein:
the interaction assembly comprises a touchpad, and
adjusting the first view and/or the second view in response to receiving the interaction command by the interaction assembly comprises:
in response to a view adjustment operation on the touchpad, adjusting the second view.

66. The method according to claim 64, wherein adjusting the first view and/or the second view in response to receiving the interaction command by the interaction assembly comprises:
in response to receiving the interaction command by the interaction assembly, adjusting the first view to a current view watched by a wearer wearing the head-mounted display apparatus, and adjusting the second view to a view in a reference direction of the mobile platform, the reference direction comprising at least one of the following directions of the mobile platform: a movement direction of the mobile platform, a head direction of the mobile platform, a tail direction of the mobile platform, a port direction of the mobile platform, a starboard direction of the mobile platform, a ground direction pointing to the ground relative to the mobile platform, or a sky direction pointing to the sky relative to the mobile platform.

67. The method according to claim 60, wherein controlling the second display assembly to be in the image display state comprises:
controlling the second display assembly to be in one of the following display states: a wallpaper display state, a parameter display state, a query display state, or an image transmission display state.

68. The method according to claim 67, wherein the interaction assembly comprises a touchpad, and controlling the second display assembly to be in the image display state comprises:
in response to a screen switching operation on the touchpad, controlling the second display assembly to switch from the image transmission display mode to at least one of the following states: the wallpaper display state, the parameter display state, or the query display state.

69. The method according to claim 60, wherein the display mode comprises a second display mode, and controlling the display state of the first display assembly and/or the second display assembly based on the display mode comprises:
in the second display mode, controlling the first display assembly to be in a screen-off state, and controlling the second display assembly to be in the image display state.

70. The method according to claim 60, wherein the display mode comprises a third display mode, and controlling the display state of the first display assembly and/or the second display assembly based on the display mode comprises:
in the third display mode, controlling the first display assembly to be in the image display state, and controlling the second display assembly to be in the screen-off state.

71. A head-mounted display apparatus, further comprising a processor and a memory for storing a computer program executable on the processor, wherein the processor, when executing the computer program, performs the steps of the method according to any of claims 59 to 70.

72. A head-mounted display apparatus, comprising:
a housing having an electrical cavity, an air inlet and an air outlet communicating with the electrical cavity; and
a cooling fan disposed within the electrical cavity and configured to drive airflow from the air inlet to the air outlet, wherein:
an opening direction of the air outlet is toward a first direction, or the opening direction of the air outlet is inclined toward the first direction relative to a first reference plane, the first direction being a direction away from a face of a wearer, and the first reference plane being perpendicular to the first direction.

73. A head-mounted display apparatus, comprising:
a housing having an electrical cavity, an air inlet and an air outlet communicating with the electrical cavity; and
a cooling fan disposed within the electrical cavity and configured to drive airflow from the air inlet to the air outlet, wherein the housing comprises two view zones distributed along a width direction of the head-mounted display apparatus, and the air outlet is located between the two view zones along the width direction.

74. A head-mounted display apparatus, comprising:
a housing having an electrical cavity, an air outlet and a plurality of air inlets communicating with the electrical cavity; and
a cooling fan disposed within the electrical cavity and configured to drive airflow from the plurality of air inlets to the air outlet, wherein the plurality of air inlets are distributed on opposite sides of the air outlet along a width direction of the head-mounted display apparatus.

75. The head-mounted display apparatus according to any of claims 72 to 74, wherein an opening direction of the air outlet is inclined toward a first direction relative to a first reference plane.

76. The head-mounted display apparatus according to claim 75, wherein the opening direction of the air outlet is parallel to a second reference plane, and the second reference plane is perpendicular to the width direction of the head-mounted display apparatus.

77. The head-mounted display apparatus according to claim 75, wherein the opening direction of the air outlet points to a top side of a third reference plane, and the third reference plane is perpendicular to the height direction of the head-mounted display apparatus.

78. The head-mounted display apparatus according to claim 75, wherein an angle between the opening direction of the air outlet and the first reference plane is greater than or equal to 25° and less than or equal to 65°.

79. The head-mounted display apparatus according to claim 75, wherein:
the air inlet comprises at least one first air inlet, and an opening direction of the first air inlet is toward a width direction of the head-mounted display apparatus; and/or
the air inlet comprises at least one second air inlet, and an opening direction of the second air inlet is toward a second direction, or the opening direction of the second air inlet is inclined toward the second direction relative to the first reference plane, the second direction being opposite to the first direction, the first reference plane being perpendicular to the first direction.

80. The head-mounted display apparatus according to claim 79, wherein the air inlet comprises at least one second air inlet, and an opening direction of the second air inlet is inclined toward the second direction relative to the first reference plane, wherein:
the opening direction of the second air inlet intersects with a second reference plane, the second reference plane is perpendicular to the width direction of the head-mounted display apparatus, and/or the opening direction of the second air inlet is parallel to a third reference plane, the third reference plane is perpendicular to the height direction of the head-mounted display apparatus.
